(19) 

**Europäisches Patentamt**
**European Patent Office**
**Office européen des brevets**

(11) **EP 4 737 508 A1**

(12) **EUROPEAN PATENT APPLICATION**
published in accordance with Art. 153(4) EPC

(43) Date of publication:
**06.05.2026 Bulletin 2026/19**

(21) Application number: **24849585.5**

(22) Date of filing: **30.07.2024**

(51) International Patent Classification (IPC):
*C08J 11/08* (2006.01)   *C08J 11/24* (2006.01)
*C08J 11/28* (2006.01)   *C08J 11/16* (2006.01)
*C08J 11/18* (2006.01)

(52) Cooperative Patent Classification (CPC):
**C08J 11/08; C08J 11/16; C08J 11/18; C08J 11/24;**
**C08J 11/28;** Y02W 30/62

(86) International application number:
**PCT/KR2024/011169**

(87) International publication number:
**WO 2025/029018 (06.02.2025 Gazette 2025/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.07.2023 KR 20230099647**
**12.10.2023 KR 20230136205**

(71) Applicant: **Korea Research Institute of Chemical**
**Technology**
**Daejeon 34114 (KR)**

(72) Inventors:
• **CHO, Joung Mo**
**Daejeon 34114 (KR)**
• **LE, Thi Hong Ngan**
**Daejeon 34114 (KR)**

(74) Representative: **Isarpatent**
**Patent- und Rechtsanwälte PartG mbB**
**Friedrichstraße 31**
**80801 München (DE)**

(54) **CHEMICAL RECYCLING METHOD FOR MIXED WASTE POLYMERS**

(57) The present invention relates to a method for recycling mixed polymers comprising a polymer having an urethane functional group and/or a polymer having an amide functional group, in which, in recycling mixed polymers comprising a polymer having an urethane functional group and/or a polymer having an amide functional group, by sequentially or simultaneously bringing, into contact with the mixed polymers, a first compound including at least one aromatic compound having one or more alkoxy functional groups and a second compound including at least one compound having one or more alcohol functional groups, the polymer having an urethane functional group in a composite polymer is selectively dissolved, filtered, and separated, and thus the separated polymer having an urethane functional group can be separately depolymerized.

Fig.1

I. Removal of impurities
II. Dissolution of polyurethane
III. Depolymerization of polyester
IV. Depolymerization of polyurethane

EP 4 737 508 A1

## Description

### Technical Field

The present disclosure relates to a method for chemically recycling mixed polymer materials, in which, in recycling a mixed polymer material composed of polymer compounds having dissimilar chemical structures, which are randomly mixed or are integrated to have a predetermined composition and specific structure, a series of processes is configured by establishing a plurality of conditions under which only a specific polymer can be selectively dissolved from the mixed polymer material, thereby enabling partial or specific polymers to be physically separated individually, followed by depolymerization of the separated polymers.

### Background Art

Polymers synthesized from petroleum-derived feedstocks offer advantages such as being inexpensive, durable, and easy to mold and process. Accordingly, they have been widely used in the production of various products such as synthetic fibers and plastics. Due to these advantages, the consumption of products manufactured from such synthetic polymers has increased dramatically across many aspects of modern daily life over the past several decades. However, synthetic polymer waste that is not properly managed after use is often treated by environmentally unfriendly methods, giving rise to various environmental problems. In some cases, such waste is disposed of in landfills or released into the environment, where it undergoes fragmentation into smaller pieces. These microplastic particles subsequently disperse throughout ecosystems, accumulate in living organisms, and can ultimately be reabsorbed into the human body through pathways such as fine particulate matter, drinking water, and food. This widespread contamination poses direct threats to human health and the living environment.

To address these issues, extensive research and development efforts have been undertaken to minimize the accumulation of plastics or to mitigate their environmental impact. Such efforts include the development of novel plastic materials with short degradation cycles under natural conditions, as well as approaches ranging from chemical depolymerization of conventional petroleum-based plastics to physical recycling and reprocessing of plastic waste. However, material or physical recycling methods, in which polymeric materials are reused after washing or reused with partial modification of their shape or properties, are known to suffer from difficulties in controlling material properties and quality. As a result, their applications and the number of feasible recycling cycles are limited. On the contrary, depolymerization methods that chemically break down post-consumer synthetic polymer products enable the production of monomers corresponding to the original feedstocks prior to polymer synthesis. Even after repeated recycling cycles, such methods allow for reproduction of products with quality equivalent or similar to that of the virgin material. Therefore, chemical depolymerization has attracted considerable attention as a practical technology for establishing a circular resource economy.

Since polymers exhibit different degradation behaviors depending on their types, and the nature and properties of degradation products also vary, the recycling of mixed polymer products containing two or more types of polymers generally necessitates a preliminary classification process to separate the materials into single substances having uniform polymer structures. In particular, post-consumer textile waste is frequently a complex mixture of various fiber types and is commonly disposed of as blended materials. Thus, recycling such textile waste requires a series of processes, including pretreatment steps such as sorting and separation of individual polymers and removal of foreign materials, as well as effective methods for decomposing or processing the separated materials at each stage.

With the recent development of functional fiber materials, the related textile market has continued to expand significantly. In particular, the market for polyurethane-based fibers, commonly referred to as Spandex, Elastan, or Lycra, has experienced explosive growth. Depending on the manufacturer, such polyurethane fibers are marketed under various trade names, including Elaspan, Acepora, Creora, INVIYA, ROICA, and Dorlastan.

Polyurethane-based fibers exhibit excellent elasticity as well as outstanding biocompatibility, enabling them to completely replace conventional rubber materials. To further enhance functionality, fibers produced by blending polyurethane with other synthetic fibers are far more extensively used than homogeneous fibers.

In addition to fibers containing polyurethane, fibers composed of various combined materials may also be utilized to improve functionality or durability. For example, mixed fibers may be produced from combinations of synthetic polymer materials such as polyester or nylon, or natural polymer materials derived from plant- or animal-based sources, such as cotton, cellulose, flax, and wool. In industrial spinning processes, these fibers are blended in highly complex and diverse material compositions and structural forms and supplied to the market. Examples include blended yarns, which are produced by spinning two or more different fibers together, and mixed filament yarns, which are produced by extruding or spinning fibers having different structures and properties into a single continuous filament.

Such fiber blends are generally difficult to separate into individual constituent materials using conventional simple separation techniques or physical sorting processes, thereby making recycling of post-consumer mixed textile waste even more challenging. In recent years, research efforts have actively explored technologies for separating fibers by material type using optical or hyperspectral techniques. However, the intrinsic structural complexity and diverse compositions of blended fibers make accurate classification challenging. Moreover, even when successful classification is achieved, the differences in degradation conditions and chemical properties among the constituent materials pose substantial limitations on the effective recycling of composite materials composed of distinct constituents.

For example, a polymer with an ester functional group, such as PET-based plastic or polyester fiber, a polymer with a urethane functional group, such as polyurethane, and a polymer with an amide bond, such as nylon, are present together in a mixed material and are subjected to simultaneous depolymerization without prior separation of the individual polymers, the optimal depolymerization conditions for each polymer differ significantly. As a result, the depolymerization efficiency of the individual polymers is substantially reduced, and such simultaneous depolymerization yields a complex mixture of depolymerization products. Such products include, for example, bis(2-hydroxyethyl) terephthalate (BHET), which is a depolymerization product of ester-functional polymers, polyols that are monomers derived from urethane-functional polymers, and various oligomers derived from the respective polymers, all of which are intermixed. Removing some of these components or selectively re-separating only useful monomers and purifying them to a high degree can be very energy-intensive, and the purification process itself may face substantial limitations.

Japanese Patent Application Publication No. 2014-058476 discloses a method for producing, at relatively high yields, polymer constituent raw materials, such as bis-hydroxyethyl terephthalate, terephthalic acid, or dimethyl terephthalate, from polyester waste mainly composed of polyalkylene terephthalate containing polyurethane. The method claims controlling the total concentration of isocyanate groups and amino groups to 1,000 ppm or less by diluting or washing the reaction mixture after depolymerization. However, this document does not describe methods for separately isolating polyurethane itself from waste feedstocks or recycling the polyurethane component.

Japanese Patent Application Publication No. 2019-035022 relates to a mixed-fiber separation method in which, under heating treatment in the presence of an organic acid, a first fiber containing a resin bonded by urethane linkages is not decomposable and retains in fibrous form, while only a second fiber bonded by β-glycosidic linkages, such as cotton or flax fiber, and a third fiber bonded by amide linkages are decomposed and separated. In this related art document, although fibers containing β-glycosidic bonds and amide bonds are selectively decomposed, there is no description of technologies for selectively dissolving and separating only urethane-bond-containing resins or only amide-bond-containing resins subsequently depolymerizing a portion thereof as raw materials. As described above, when constituent polymers are decomposed without prior separation, the resulting product is obtained as an impure mixture of various compounds. Chemical recycling of such a mixture requires highly efficient separation and purification technologies, making the process economically unfavorable and imposing limitations on the quality of the final recycled raw materials.

Furthermore, Japanese Patent Application Publication No. 2011-231279 discloses a method in which only polyurethane is swollen, decomposed, dissolved, or peeled off from a mixed material that is not composed solely of polyurethane, namely, a composite material in which a polyurethane layer is bonded or fixed to a substrate such as a polypropylene sheet that is not decomposable by depolymerization. According to this method, the polyurethane degradation products do not remain on or become mixed with the substrate, thereby enabling separation and recycling of the substrate. This technique is directed to recycling the substrate by removing polyurethane, and proposes a method for decomposing and removing the polyurethane layer from the substrate by applying a solution obtained by mixing a solvent having a boiling point of 150°C or higher with an alkali metal carbonate or phosphate. This approach is limited to materials that are separable due to a distinct difference in reactivity between the constituent materials, even when they are present in a mixed state, namely, a method for removing polyurethane from a homopolymer resin that does not undergo decomposition even when exposed to depolymerization conditions. In other words, the method is applicable only to mixtures distinguishable solely by reactive versus non-reactive components,, and therefore is not applicable to blended fibers in which polyurethane, nylon, and polyester, which may undergo depolymerization simultaneously, are co-spun or co-mixed, nor to mixed materials containing two or more polymers that are all chemically reactive under depolymerization conditions.

Accordingly, the technologies disclosed in the aforementioned related art documents may be limited in the range of recyclable waste polymer materials, and, depending on the specific technology, provide only limited improvements in the quality or performance of the resulting products, thereby rendering their industrial applicability relatively low.

Meanwhile, the present applicant has devised a method capable of selectively dissolving and extracting a polymer with a urethane functional group and a polymer with an amide functional group from a mixed polymer material that includes a part or all of a polymer having an ester functional group, a polymer having a urethane functional group, a polymer having an amide functional group, and polymers composed of various other types of chemical bonds , such as cotton, flax, rayon, silk, acrylic, polyethylene, and polypropylene. Through this approach, polymers having different chemical characteristics can be effectively separated or isolated from one another. Furthermore, the polyurethane-based polymers and ester-based polymers separately recovered from mixed waste polymers or waste textile fibers can be directly used as feedstock for depolymerization without requiring additional purification or washing steps. By applying a simple and efficient low-temperature depolymerization method that enables rapid decomposition even under low-temperature conditions, each constituent polymer can be chemically decomposed. Through experimental verification, it has been confirmed that high-purity and high-yield recycled raw materials (or monomers) can be produced therefrom, thereby leading to the completion of the present disclosure.

**Disclosure**

**Technical Problem**

The present disclosure has been devised to recycle mixed waste polymers that are difficult to process using conventional known separation or decomposition methods. Specifically, the present disclosure addresses a mixed polymer material in which two or more different polymers are combined, the polymers including a polymer having an ester functional group, a polymer having a urethane functional group, a polymer having an amide functional group, and polymers composed of various other types of chemical bonds. These polymers may be physically mixed or be integrated into a blended material with a fibrous structure such as woven or knitted textiles. Accordingly, the present disclosure is intended to provide: a composition for selectively dissolving the polymer having the urethane functional group and/or the polymer having the amide functional group from the mixed polymer material, thereby separating them from other polymer components; a thermodynamic separation method for individually selectively isolating the polymer having the urethane functional group and the polymer compound having the amide functional group by controlling the solubility of each polymer in the dissolved mixture; and a depolymerization method for chemically decomposing the polymer having the ester functional group and the polymer having the urethane functional group separated through the above processes, so as to recover recyclable monomers or to regenerate feedstocks suitable for polymer resynthesis.

Additionally, the present disclosure is intended to provide a chemical recycling method for mixed waste polymers, in which, by using the above composition, a polymer having a urethane functional group and/or a polymer having an amide functional group are selectively dissolved and separated from a mixed polymer material. The mixed polymer material may be a mixture of a polymer having a urethane functional group and a polymer having an amide functional group; or a mixed polymer material that includes at least one of the polymer having the urethane functional group and the polymer having the amide functional group, and at least one polymer selected from natural or synthetic cellulose-based fibers such as cotton, flax, and rayon; animal-derived fibers such as silk; and synthetic fibers such as acrylic, polyethylene, polypropylene, and a polymer having an ester functional group, which constitute a part or all of the components of the mixed polymer material. After selectively dissolving and separating the polymer having the urethane functional group and/or the polymer having the amide functional group from the mixed polymer material, polymers amenable to depolymerization are individually configured as single-component reactants and then subjected to a depolymerization reaction, thereby enabling the production of high-purity depolymerization products.

**Technical Solution**

In order to accomplish the above objectives, the present disclosure provides a composition for selectively dissolving and separating a polymer having a urethane functional group and/or a polymer having an amide functional group from a mixed polymer material, wherein the mixed polymer material may be a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material, and wherein the composition may include: at least one first compound selected from aromatic compounds having at least one alkoxy functional group; and at least one second compound selected from compounds having at least one alcohol functional group.

In one embodiment of the present disclosure, a weight ratio of the first compound to the second compound may be in a range of 0.01 to 100.

Additionally, the present disclosure provides a method for selectively dissolving and separating a polymer having a urethane functional group and/or a polymer having an amide functional group from a mixed polymer material, wherein the mixed polymer material may be a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material together, and wherein the polymer having the urethane functional group and/or the polymer having the amide functional group may be selectively dissolved from the mixed polymer material by bringing, into sequential or simultaneous contact with the mixed polymer material, at least one first compound selected from aromatic compounds having at least one alkoxy functional group and at least one second compound selected from compounds having at least one alcohol functional group.

In one embodiment of the method of the present disclosure, when the polymer having the amide functional group is not present in the mixed polymer material, a temperature range for selectively dissolving only the polymer having the urethane functional group may be from 100°C to 180°C. When both the polymer having the urethane functional group and the polymer having the amide functional group are present in the mixed polymer material, a temperature range for dissolving the polymer having the urethane functional group and the polymer having the amide functional group may be from 135°C to 180°C.

In another embodiment of the method of the present disclosure, the sequential contact may be performed by bringing the first compound into contact with the mixed polymer material first, followed by bringing the second compound into contact therewith.

Additionally, a mass ratio of the first compound to the mixed polymer material is in a range of 0.1 to 1,000 times, and a weight ratio of the first compound to the second compound may be in a range of 0.01 to 100.

Additionally, the present disclosure provides a method for recycling a mixed polymer material, wherein the mixed polymer material may be a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material, the method including: (a) bringing, into contact with the mixed polymer material, at least one first compound selected from aromatic compounds having at least one alkoxy functional group and at least one second compound selected from compounds having at least one alcohol functional group, thereby selectively dissolving only the polymer having the urethane functional group and/or the polymer having the amide functional group within the mixed polymer material; (b) filtering the mixed solution generated after the selective dissolution to separate the polymer having the urethane functional group and/or the polymer having the amide functional group from the mixed polymer material; and (c) depolymerizing the polymers separated as a solid phase.

In one embodiment of the method of the present disclosure, the polymers depolymerized in step (c) may include the polymer having the ester functional group.

In another embodiment of the method of the present disclosure, the method may further include: after step (c), (d) adjusting a temperature of the mixture containing the separated polymers having the urethane functional group and the amide functional group, thereby selectively precipitating only the polymer having the amide functional group and separating the polymer having the urethane functional group; and (e) depolymerizing the separated polymer having the urethane functional group.

In another embodiment of the method of the present disclosure, the method may further include: after step (c), depolymerizing the separated polymer having the urethane functional group.

In another embodiment of the method of the present disclosure, the depolymerizing of the polymer having the urethane functional group in step (c) may be performed by adding a depolymerization catalyst for the polymer having the urethane functional group to the filtrate obtained after filtration in step (b).

In another embodiment of the method of the present disclosure, the depolymerization catalyst for the polymer having the urethane functional group may be at least one selected from the group consisting of metal catalysts such as alkali hydroxides, alkaline earth hydroxides, alkali acetates, alkaline earth acetates, alkali carbonates, alkali bicarbonates, alkaline earth carbonates, alkali oxides; and guanidine-based or amine-based organic compounds.

In another embodiment of the method of the present disclosure, the depolymerizing of the polymer having the urethane functional group may be performed at a temperature in a range of 100°C to 180°C.

In another embodiment of the method of the present disclosure, the depolymerizing of the polymer having the ester functional group in step (c) may be performed by using at least one method selected from hydrolysis, glycolysis, methanolysis, ethanolysis, and ammonolysis.

In another embodiment of the method of the present disclosure, among the solid-phase polymers separated in step (c), non-depolymerizable materials may be separated from the reaction product by filtration or centrifugation.

**Advantageous Effects**

According to the present disclosure, only a polymer having a urethane functional group and/or a polymer having an amide functional group can be selectively dissolved and extracted from a mixed waste polymer material. The mixed waste polymer material may be a mixture of a polymer having a urethane functional group and a polymer having an amide functional group, or a mixed waste polymer material that includes at least one polymer selected from a polymer having a urethane functional group and a polymer having an amide functional group, and at least one polymer selected from natural or synthetic cellulose-based fibers such as cotton, flax, and rayon; animal-derived fibers such as silk; and synthetic fibers such as acrylic, polyethylene, polypropylene, and a polymer having an ester functional group, which constitute a part or all of the components of the mixed waste polymer material. The dissolved polymers can be individually separated from each other by controlling the solubility thereof, thereby providing a simple yet highly efficient method for separating polymer components.

Compounds configured for separating partial or specific polymer components from the mixed waste polymer material exert their effect by mixing a first compound including at least one aromatic compound having at least one alkoxy functional group and a second compound including at least one compound having at least one alcohol functional group. The use of the first compound alone enables easy integration with a pretreatment process for mixed waste polymer materials, in which dyes, pigments, and other hydrophobic organic and inorganic contaminants are removed. For example, a method can be provided for selectively extracting and separating only a polymer having a urethane functional group and/or a polymer having an amide functional group from a mixed waste polymer material by removing organic contaminants in a first process employing only the first compound and by adding the second compound in a subsequent second process.

Additionally, in a mixture containing both the polymer having the urethane functional group and the polymer having the amide functional group after separation, only the polymer having the amide functional group can be selectively precipitated by controlling the temperature of the mixture. The polymer having the urethane functional group can then be extracted and separated as a filtrate by a simple separation method such as filtration. Depolymerization (via alcoholysis) can be carried out by adding only a depolymerization catalyst to the mixed solution from which the polymer having the urethane functional group has been extracted, thereby enabling the recovery of a recyclable polyol feedstock with high purity.

Furthermore, in recycling the mixed polymer material, the present disclosure enables the polymer having the urethane functional group and/or the polymer having the amide functional group to be individually separated from the mixed polymer material, and further enables depolymerization to be carried out separately for the polymer having the urethane functional group and other polymers that are individually depolymerizable, for example, a polymer having an ester functional group. Accordingly, optimal depolymerization conditions can be independently designed for each polymer constituting the mixed polymer material, thereby allowing depolymerization products derived from each polymer to be controlled to have high quality and high yield. Additionally, since each depolymerization product is obtained without being intermixed with other depolymerization products, unnecessary loss of energy and materials during subsequent purification processes can be minimized.

In particular, the present disclosure can be applied as a chemical recycling technology for mixed or composite polymer fiber materials, such as blended fibers, in which polyurethane exhibiting high elasticity and nylon, as well as at least one polymer selected from cotton, flax, rayon, silk, acrylic, polyethylene, polypropylene, and polyester, are included as constituent components. Although the production and consumption of such blended fibers have steadily increased, such fibers are typically processed into complex textile structures, such as woven fabrics or knitted fabrics, in which the constituent materials are intricately interlaced and difficult to separate. Consequently, most post-consumer clothing has been treated via environmentally unfavorable methods such as landfilling or incineration. The present disclosure enables chemical separation of post-consumer blended fiber materials, followed by depolymerization of each constituent material having different properties, thereby enabling the materials to be reverted to their pre-synthesis raw materials. This approach can not only improve the recycling efficiency of waste clothing, but also contribute to the realization of a circular economy in the apparel and fashion industries.

## Description of Drawings

FIG. 1 is a schematic diagram illustrating a method for recycling mixed polymer material or blended fibers by separating and depolymerizing synthetic polymers, such as polyurethane or polyester, from a mixed polymer material including a polymer with a urethane functional group and a polymer with an ester functional group, and optionally further including at least one polymer selected from cotton, flax, rayon, silk, acrylic, polyethylene, and polypropylene, according to an embodiment of the present disclosure.

FIG. 2 is a schematic diagram illustrating a method for recycling mixed polymer materials or blended fibers in which, in addition to a polymer with a urethane functional group, a polymer with an amide functional group is further included in polymer feedstocks, according to an embodiment of the present disclosure.

FIG. 3 illustrates stereomicroscopic images showing the morphology of a mixed polymer material of Example 1 after selectively dissolving polyurethane by bringing the mixed polymer material into contact with a first compound and a second compound, in which the contact times are (a) 5 minutes, (b) 10 minutes, (c) 30 minutes, and (d) 180 minutes.

FIG. 4 illustrates the chemical structure of polyester (Raw Material 2) contained in a mixed polymer material of Raw Material 1 and the positions of protons therein.

FIG. 5 illustrates the chemical structure of polyurethane (Raw Material 3) contained in the mixed polymer material of Raw Material 1 and the positions of protons therein.

FIG. 6 illustrates $^1$H-NMR spectra measured for a mixed polymer material, single constituent polymers thereof, and polymers separated according to a method of Example 1.

FIG. 7 illustrates IR spectra of polyester and polyurethane polymers that can be separated from a mixed polymer material.

FIG. 8 illustrates images of polymer feedstocks obtained by preliminarily removing colored impurities from a mixed colored polymer material by applying different temperatures of a first compound.

FIG. 9 illustrates the chemical structure of a polyol obtained by depolymerization after separating polyurethane from a mixed polymer material or a raw material used for synthesizing spandex, and the positions of protons therein.

FIG. 10 illustrates $^1$H-NMR spectra measured for recycled polyols obtained from depolymerization of separated polyurethane and a polyol supplied by a reagent manufacturer.

FIG. 11 illustrates IR spectra of recycled polyols obtained from depolymerization of separated polyurethane and a polyol supplied by a reagent manufacturer.

FIG. 12 illustrates a process for separating and recovering each polymer from a nylon-polyurethane mixed polymer material and the appearances of products obtained at each step.

FIG. 13 illustrates IR spectra of a nylon-polyurethane mixed polymer material and nylon and polyurethane separated therefrom.

FIG. 14 illustrates the chemical structure of nylon and the positions of protons therein.

FIG. 15 illustrates $^1$H-NMR spectra measured for a nylon-polyurethane mixed polymer material and nylon and polyurethane separated therefrom.

FIG. 16 illustrates steps of separating selectively soluble polymers from various mixed polymer materials, and stereomicroscopic images of fiber materials that remain undecomposed after applying depolymerization to insoluble polymers.

FIG. 17 illustrates stereomicroscopic images of acrylic and silk fibers contained in a mixed polymer material, as well as acrylic and silk fibers recovered as residual polymers after selective dissolution and depolymerization steps, together with images illustrating the morphology of the recovered fibers.

**Mode for Invention**

Unless otherwise defined, all terms including technical and scientific terms used herein have the same meaning as commonly understood by one of ordinary skill in the art to which this disclosure belongs. Generally, the nomenclature used herein is well known in the art and is the nomenclature normally used.

As used herein, when any part "includes" any element, this indicates that other elements are not excluded but may be further included unless otherwise specifically mentioned.

The present disclosure provides a composition for selectively dissolving a polymer having a urethane functional group and/or a polymer having an amide functional group from a mixed polymer material, namely: a mixed polymer material including a polymer having a urethane functional group and a polymer having an amide functional group; or a mixed polymer material in which at least one polymer selected from the polymer having the urethane functional group and the polymer having the amide functional group, and at least one polymer selected from cotton, flax, rayon, silk, acrylic, polyethylene, polypropylene, and a polymer having an ester functional group constitute a part or all of the components of the mixed polymer material.

Additionally, the present disclosure provides a method for selectively dissolving a polymer having a urethane functional group and/or a polymer having an amide functional group from the mixed polymer material by using the composition described above.

Furthermore, the present disclosure relates to a method for recycling a mixed polymer material. The method includes selectively dissolving a polymer having a urethane functional group and a polymer having an amide functional group contained in the mixed polymer material, followed by filtration, thereby individually separating the polymer having the amide functional group and/or the polymer having the urethane functional group from the mixed polymer material. By subsequently applying depolymerization reaction conditions optimized according to the type and properties of each polymer, a high-purity and high-yield product may be obtained.

The mixed polymer material of the present disclosure includes: a mixed polymer material including a polymer having a urethane functional group and a polymer having an amide functional group; and a mixed polymer material including at least one polymer selected from the polymer having the urethane functional group and the polymer having the amide functional group and at least one polymer selected from cotton, flax, rayon, silk, acrylic, polyethylene, polypropylene, and a polymer having an ester functional group, which constitute a part or all of the components of the mixed polymer material. Additionally, the mixed polymer material may include composite textile waste consisting of multiple polymer components combined through manufacturing methods such as spin blending, fiber blending, or twisted stitching.

In the present disclosure, the polymer having the urethane functional group refers to a material derived from polyhydric alcohols (or polyols), in which a molecular structure providing flexibility and elastic recovery and a molecular structure providing strong cohesive force are bonded to each other via urethane linkages to form a high-molecular-weight structure, and such a compound is also referred to as polyurethane. The polymer having the urethane functional group may include polyurethane having soft or rigid characteristics, and may be a foam-type polyurethane manufactured to contain cellular pores formed by foaming during production, or a non-form polyurethane in which a continuous polymer phase predominates. Here, the polymer may include polyethylene, high-density polyethylene, low-density polyethylene, polypropylene, polyethylene terephthalate, or a combination thereof. However, it is not limited to the aforementioned polymer types, and may present as a mixture with other known polymers, in a copolymerized form, or in a form containing various types of organic or inorganic foreign substances.

As one example of the polymer having the urethane functional group, polyurethane is a polymer in the form of a multiblock copolymer containing a urethane functional group, and is composed of a hard segment (HS) having a rigid structure adjacent to the urethane linkage, which provides strong cohesive force and maintains thermodynamic stability, and a soft segment (SS) that forms a flexible polymer chain to impart elasticity. Accordingly, the polyurethane may exhibit a wide variety of types, forms, and properties.

The hard segment (HS) of the polyurethane may be formed using various types of diisocyanates, among which aromatic diisocyanates are the most common. Representative examples of aromatic diisocyanates that form the HS through polyurethane synthesis include toluene diisocyanate (TDI), methylene diphenyl diisocyanate (MDI), and m-xylene diisocyanate (MXDI), which may be used in monomeric form. Alternatively, polymeric forms such as polyisocyanates, which are readily soluble in organic phases and easy to handle, may be used. The soft segment (SS) constituting the flexible polymer chain of the polyurethane may be formed using polyether polyols, polyester polyols, or poly(tetramethylene ether) glycol (PTMEG) (also referred to as polytetrahydrofuran (PolyTHF)).

Additionally, in the present disclosure, the polymer having the ester functional group may be a polymer formed by condensation polymerization of dicarboxylic acid and dialcohol. Here, the dicarboxylic acid is selected from the group consisting of terephthalic acid, naphthalene dicarboxylic acid, diphenyl dicarboxylic acid, diphenyl ether dicarboxylic acid, diphenyl sulfone dicarboxylic acid, diphenoxyethane dicarboxylic acid, succinic acid, adipic acid, sebacic acid, azelaic acid, decane dicarboxylic acid, cyclohexane dicarboxylic acid, trimellitic acid, pyromellitic acid, and a combination thereof. The dialcohol is selected from the group consisting of ethylene glycol, trimethylene glycol, 1,2-propanediol, tetramethylene glycol, neopentyl glycol, hexamethylene glycol, decanemethylene glycol, dodecamethylene glycol, 1,4-cyclohexanedimethanol, diethylene glycol, triethylene glycol, tetraethylene glycol, polyethylene glycol, dipropylene glycol, tripropylene glycol, tetrapropylene glycol, polypropylene glycol, di(tetramethylene) glycol, tri(tetramethylene) glycol, polytetramethylene glycol, pentaerythritol, 2,2-bis(4-β-hydroxyphenyl)propane, and a combination thereof.

By way of example, the polymer having the ester functional group may be selected from the group consisting of polyethylene terephthalate (PET), polypropylene terephthalate (PPT), polyglycolide or polyglycolic acid (PGA), polylactic acid (PLA), polycaprolactone (PCL), polyhydroxyalkanoate (PHA), polyhydroxybutyrate (PHB), polyethylene adipate (PEA), polybutylene succinate (PBS), poly(3-hydroxybutyrate-co-3-hydroxyvalerate) (PHBV), polybutylene terephthalate (PBT), polytrimethylene terephthalate (PTT), polyethylene naphthalate (PEN), Vectran, and a combination thereof.

In the present disclosure, the polymer having the amide functional group is a polymer compound composed of amide bonds in its molecular structure and is a synthetic material commonly referred to as nylon or polyamide. By way of example, the polymer having the amide functional group may be selected from the group consisting of nylon 6, nylon 6,6, nylon 4,6, nylon 6,10, nylon 6,12, nylon 11, nylon 12, MXD6 nylon, and a combination thereof.

Hereinafter, a method for recycling a mixed polymer material, in which polymers including a polymer having a urethane functional group and/or a polymer having an amide functional group and at least one polymer selected from cotton, flax, rayon, silk, acrylic, polyethylene, polypropylene, and polyester constitute a part of the components of the mixed polymer material; and a composition therefor according to embodiments of the present disclosure will be described in detail with reference to the accompanying drawings.

In order to recycle a mixed polymer material according to an embodiment of the present disclosure, namely, a mixed polymer material including a polymer having a urethane functional group and a polymer having an amide functional group; or a mixed polymer material including at least one polymer selected from the polymer having the urethane functional group and the polymer having the amide functional group and at least one polymer selected from cotton, flax, rayon, silk, acrylic, polyethylene, polypropylene, and a polymer having an ester functional group, which constitute a part or all of the components of the mixed polymer material, a composition for selectively dissolving the polymer having the urethane functional group and the polymer having the amide functional group contained in the mixed polymer material is used. The composition is characterized by including: a first compound including at least one aromatic compound having at least one alkoxy functional group; and a second compound including at least one compound having at least one alcohol functional group.

The first compound may be at least one compound selected from the group consisting of methoxybenzene, ethoxybenzene, butoxybenzene, 1,2-dimethoxybenzene, 1,3-dimethoxybenzene, 1,4-dimethoxybenzene, 1,2-diethoxybenzene, 1,3-diethoxybenzene, 1,4-diethoxybenzene, 1,2,3-trimethoxybenzene, 1,2,4-trimethoxybenzene, 1,3,5-trimethoxybenzene, 1,2,3-triethoxybenzene, 1,2,4-triethoxybenzene, 1,3,5-triethoxybenzene, 1,2,3,4-tetramethoxybenzene, 1,2,3,5-tetramethoxybenzene, 1,2,4,5-tetramethoxybenzene, 1-methoxy-2-methylbenzene, 1-methoxy-3-methylbenzene, 1-methoxy-4-methylbenzene, 1-ethyl-2-methoxybenzene, 1-ethyl-3-methoxybenzene, 1-ethyl-4-methoxybenzene, 1-ethoxy-2-methylbenzene, 1-ethoxy-3-methylbenzene, 1-ethoxy-4-methylbenzene, 1-ethoxy-2-ethylbenzene, 1-ethoxy-3-ethylbenzene, 1-ethoxy-4-ethylbenzene, 1-methoxy-2-prop-2-enylbenzene, 1-methoxy-3-prop-1-enylbenzene, 1-methoxy-3-prop-2-enylbenzene, 1-methoxy-4-prop-2-enylbenzene, 1-methoxy-4-[(E)-prop-1-enyl]benzene (cis), 1-methoxy-4-[(E)-prop-1-enyl]benzene (trans), methyl 2-ethoxybenzoate, methyl 3-ethoxybenzoate, methyl 4-ethoxybenzoate, ethyl 2-ethoxybenzoate, ethyl 3-ethoxybenzoate, ethyl 4-ethoxybenzoate, ethyl (E)-3-(4-hydroxy-3,5-dimethoxyphenyl)prop-2-enoate, 2-methoxybenzaldehyde, 3-methoxybenzaldehyde, 4-methoxybenzaldehyde, 2-ethoxybenzaldehyde, 3-ethoxybenzaldehyde, 4-ethoxybenzaldehyde, 2-propoxybenzaldehyde, 3-propoxybenzaldehyde, 4-propoxybenzaldehyde, 2-butoxybenzaldehyde, 3-butoxybenzaldehyde, 4-butoxybenzaldehyde, 2-methoxybenzonitrile, 3-methoxybenzonitrile, 4-methoxybenzonitrile, 2-methoxybenzoic acid, 3-methoxybenzoic acid, 4-methoxybenzoic acid, 2,3-dimethoxybenzoic acid, 2,4-dimethoxybenzoic acid, 2,5-dimethoxybenzoic acid, 2,6-dimethoxybenzoic acid, 3,4-dimethoxybenzoic acid, 3,5-dimethoxybenzoic acid, 2,3-dimethoxy-4-methylbenzoic acid, 2,5-dimethoxy-4-methylbenzoic acid, 2,6-dimethoxy-4-methylbenzoic acid, 3,5-dimethoxy-4-methylbenzoic acid, 2-ethoxybenzoic acid, 3-ethoxybenzoic acid, 4-ethoxybenzoic acid, 2-ethoxy-3-ethylbenzoic acid, 3-ethoxy-5-ethylbenzoic acid, 4-ethoxy-2-ethylbenzoic acid, 4-ethoxy-3-ethylbenzoic acid, 3-ethoxy-4-hydroxybenzoic acid, ethyl 2-methoxybenzoate, ethyl 3-methoxybenzoate, ethyl 4-methoxybenzoate, 2-hydroxy-3-methoxybenzoic acid, 2-hydroxy-4-methoxybenzoic acid, 2-hydroxy-5-methoxybenzoic acid, 2-hydroxy-6-methoxybenzoic acid, 2-hydroxy-4,5-dimethoxybenzoic acid, 2-hydroxy-4,6-dimethoxybenzoic acid, 3-hydroxy-4-methoxybenzoic acid, 3-hydroxy-5-methoxybenzoic acid, 3-hydroxy-4,5-dimethoxybenzoic acid, 4-hydroxy-2-methoxybenzoic acid, 4-hydroxy-3-methoxybenzoic acid, 4-hydroxy-2,6-dimethoxybenzoic acid, 4-hydroxy-3,5-dimethoxybenzoic acid, 3,4-dihydroxybenzoic acid, 3-(hydroxy-3,5-dimethoxyphenyl)prop-2-enoic acid, 2-methoxyphenol, 3-methoxyphenol, 4-methoxyphenol, 2-methoxy-4-prop-1-enylphenol, 2-methoxy-4-prop-2-enylphenol, 4-methoxy-2-[(E)-prop-1-enyl]phenol, 1-(4-methoxyphenyl)ethanone, 2,3-dimethoxyphenol, 2,4-dimethoxyphenol, 2,5-dimethoxyphenol, 2,6-dimethoxyphenol, 3,4-dimethoxyphenol, 3,5-dimethoxyphenol, 2,6-dimethoxy-4-prop-2-enylphenol, 2-ethoxyphenol, 3-ethoxyphenol, 4-ethoxyphenol, 4-ethyl-2,5-dimethoxyphenol, 4-ethyl-2,6-dimethoxyphenol, 2-tert-butyl-4-methoxyphenol, 3-tert-butyl-4-methoxyphenol, 4-tert-butyl-2-methoxyphenol, 1-(4-hydroxy-2,6-dimethoxyphenyl)ethanone, 1-(4-hydroxy-3,5-dimethoxyphenyl)ethanone, 2-hydroxy-3-methoxybenzaldehyde, 2-hydroxy-4-methoxybenzaldehyde, 2-hydroxy-5-methoxybenzaldehyde, 2-hydroxy-6-methoxybenzaldehyde, 3-hydroxy-2-methoxybenzaldehyde, 3-hydroxy-4-methoxybenzaldehyde, 3-hydroxy-5-methoxybenzaldehyde, 4-hydroxy-2-methoxybenzaldehyde, 4-hydroxy-3-methoxybenzaldehyde, 2-hydroxy-3,5-dimethoxybenzaldehyde, 2-hydroxy-4,6-dimethoxybenzaldehyde, 4-hydroxy-2,6-dimethoxybenzaldehyde, 4-hydroxy-3,5-dimethoxybenzaldehyde, and 3-ethoxy-2-hydroxybenzaldehyde.

The second compound may be a monohydric or polyhydric alcohol, and may be at least one compound selected from linear, branched, cyclic, or mixed alcohols having 1 to 20 carbon atoms. The polyhydric alcohol refers to an alcohol having at least two alcohol (OH) functional groups.

The first compound and the second compound may be used not only to selectively dissolve the polymer having the urethane functional group and/or the polymer having the amide functional group, but also may be directly used as a depolymerization composition for individual polymers amenable to depolymerization, for example, for depolymerization of the polymer having the ester functional group and the polymer having the urethane functional group.

Additionally, when the weight ratio of the first compound to the second compound falls within a specific range, the selective dissolution efficiency of the polymer having the urethane functional group and the polymer having the amide functional group is enhanced. Preferably, the composition for selectively dissolving the polymer having the urethane functional group and/or the polymer having the amide functional group has a weight ratio of the first compound to the second compound (weight of first compound (g) / weight of second compound (g)) of 0.01 to 100, more preferably 0.1 to 10, and even more preferably 0.5 to 2.

The composition for selectively dissolving the polymer having the urethane functional group and/or the polymer having the amide functional group in the mixed polymer material may be in a state in which the first compound and the second compound are uniformly mixed. However, as long as the weight ratio range of the first compound to the second compound is satisfied, the first compound and the second compound may also exist as non-uniform, unstable phases.

Additionally, the present disclosure provides a method for selectively dissolving a polymer having a urethane functional group and/or a polymer having an amide functional group from a mixed polymer material, namely: a mixed polymer material including a polymer having a urethane functional group and a polymer having an amide functional group; or a mixed polymer material including at least one polymer selected from the polymer having the urethane functional group and the polymer having the amide functional group and at least one polymer selected from cotton, flax, rayon, silk, acrylic, polyethylene, polypropylene, and a polymer having an ester functional group, which constitute a part or all of the components of the mixed polymer material.

The method is characterized in that a first compound including at least one aromatic compound having at least one alkoxy functional group, and a second compound including at least one compound having at least one alcohol functional group, are brought into contact with the a mixed polymer material either sequentially or simultaneously, thereby selectively dissolving the polymer having the urethane functional group and/or the polymer having the amide functional group contained in the mixed polymer material.

The weight ratio of the first compound to the second compound and other related conditions remain the same as those described above in connection with the composition, and thus a repeated description thereof is omitted.

The first compound and the second compound may each be in a solid state at room temperature. However, when heated to the temperature range described above for selectively dissolving the polymer having the urethane functional group and/or the polymer having the amide functional group, it is preferable that the compounds are in a liquid state. More preferably, at least one of the constituent compounds is in a liquid state and is capable of dissolving other compounds.

The sequential contact of the first compound and the second compound with the mixed polymer material may be carried out by first bringing the second compound into contact with the mixed polymer material. However, it is preferable that the first compound is brought into contact with the mixed polymer material first in order to remove unnecessary foreign substances. For example, bringing the first compound into contact with a colored mixed polymer material enables a series of process steps in which colorants and other organic or inorganic foreign substances (such as dyes or pigments) contained in the colored mixed polymer material are extracted and removed in advance.

At this time, the mass ratio of the first compound to the mixed polymer material may be in a range of 0.1 to 1,000 times, and the temperature at which the contact between the first compound the mixed polymer material is made may be in a range of 100°C to 180°C. When the temperature is lower than 100°C, the effect of extracting and removing foreign substances may be insufficient. When the temperature exceeds 180°C, the foreign substances may decompose and contaminate the mixture, or depolymerization of the polymers contained in the mixed polymer material may occur prematurely. As a result, the performance of subsequent selective dissolution of the polymer having the urethane functional group and/or the polymer having the amide functional group, as well as individual depolymerization of the separated polymers, may deteriorate, leading to degradation of the quality of the final product and insufficient recycling effectiveness for the mixed polymer material.

A process for removing the foreign substances may be carried out while simultaneously purging with an inert gas such as nitrogen, or may be performed after purging has been conducted in advance. The contact time may vary depending on the amount of the mixed polymer material, the contact temperature, and the amount of the first compound, but may be in a range of 1 minute to 24 hours. Additionally, in order to facilitate the contact, a mixture composed of the first compound and the mixed polymer material may be stirred, and the first compound may be supplied initially in a batch manner or continuously in a non-stop flow. Furthermore, the first compound may be recovered from an extract generated during the foreign substance removal process by separation methods such as distillation, evaporation, or drying, and then resupplied to the foreign substance removal process or employed to adjust the amount of polymer relative to the first compound.

After preparing the composition through the foreign substance removal process using the first compound as described above, in which the mixed polymer material and the first compound are mixed, a process for selectively dissolving the polymer having the urethane functional group and/or the polymer having the amide functional group may be carried out by adding the second compound to the composition. In this case, the composition may be processed in situ or transferred to a separate external process prior to addition of the second compound. When the foreign substance removal process described above is not performed in advance, the polymer having the urethane functional group and the polymer having the amide functional group may be selectively dissolved by simultaneously adding the first compound and the second compound to the mixed polymer material. As described above, the composition of the compounds needs be adjusted such that the weight ratio of the first compound to the second compound (weight of first compound (g)/weight of second compound (g)) is in a range of 0.01 to 100.

The process for selectively dissolving the polymer having the urethane functional group and/or the polymer having the amide functional group from the mixed polymer material may be carried out while simultaneously purging with an inert gas such as nitrogen, or may be performed after purging has been conducted in advance.

The process for selectively dissolving the polymer having the urethane functional group and/or the polymer having the amide functional group from the mixed polymer material may be maintained at the above-described temperature for a duration of 1 minute to 24 hours. During this period, stirring may be performed concurrently to facilitate effective contact between the first compound and the second compound with the mixed polymer material.

After the polymer having the urethane functional group and/or the polymer having the amide functional group are selectively dissolved, the polymers that remain undissolved, i.e., the polymer having the ester functional group and the polymer selected from cotton, flax, rayon, silk, acrylic, polyethylene, and polypropylene, may be separated from the mixed solution in which the polymer having the urethane functional group and/or the polymer having the amide functional group have been dissolved by the first compound and the second compound. The separation may be performed by means such as filtration using a filter, centrifugation, decantation, or the like. However, the separation method is not limited thereto, as long as it is capable of separating the undissolved polymers from the mixture. The separation method may be carried out concurrently with the process of selectively dissolving the polymer having the urethane functional group and the polymer having the amide functional group.

When the polymer having the amide functional group is not present in the mixed polymer material, the mixture to which the prepared first compound and second compound have been added may be heated and maintained at a temperature in a range of 100°C to 180°C in order to selectively dissolve only the polymer having the urethane functional group. When the temperature is lower than 100°C, polyurethane may not be sufficiently dissolved. When the temperature exceeds 180°C, depolymerization of the polymers contained in the mixed polymer material may occur prematurely, and it may become difficult to recover high-quality products due to the occurrence of various side reactions.

When both the polymer having the urethane functional group and the polymer having the amide functional group are present in the mixed polymer material and are to be selectively dissolved, the temperature range is preferably 135°C to 180°C, more preferably 140°C to 170°C, and even more preferably 150°C to 155°C.

During the dissolution process, a mixed solution is generated in which both the polymer having the urethane functional group and the polymer having the amide functional group have been dissolved. By controlling the temperature of the extracted mixed solution, only the polymer having the amide functional group may be precipitated. Thereafter, the polymer having the amide functional group and the polymer having the urethane functional group may be individually separated by conventional solid-liquid separation methods.

The temperature range for selectively precipitating only the polymer having the amide functional group by controlling the temperature of the extracted mixed solution containing the polymer having the urethane functional group and the polymer having the amide functional group dissolved therein is preferably 10°C to 130°C, more preferably 25°C to 120°C, and even more preferably 70°C to 100°C. When the temperature exceeds 130°C, the precipitation rate of the polymer having the amide functional group may be slow or complete precipitation may not be achieved. When the temperature is lower than 10°C and the solution is left standing for an extended period of time of one day (24 h) or longer, partial precipitation of the polymer having the urethane functional group may also occur.

Additionally, the present disclosure provides a depolymerization method or a recycling method for recycling a mixed polymer material, namely: a mixed polymer material including a polymer having a urethane functional group and a polymer having an amide functional group; a mixed polymer material including at least one polymer selected from the polymer having the urethane functional group and the polymer having the amide functional group and at least one polymer selected from cotton, flax, rayon, silk, acrylic, polyethylene, polypropylene, and a polymer having an ester functional group, which constitute a part of the components of the mixed polymer material.

The depolymerization method is characterized by including: (a) bringing a first compound including at least one aromatic compound having at least one alkoxy functional group and a second compound including at least one compound having at least one alcohol functional group into contact with a mixed polymer material including a polymer having a urethane functional group and a polymer having an amide functional group; or a mixed polymer material including at least one polymer selected from the polymer having the urethane functional group and the polymer having the amide functional group and at least one polymer selected from cotton, flax, rayon, silk, acrylic, polyethylene, polypropylene, and a polymer having an ester functional group, which constitute a part of the components of the mixed polymer material, thereby selectively dissolving only the polymer having the urethane functional group and/or the polymer having the amide functional group contained in the mixed polymer material; (b) filtering the mixed solution generated after the selective dissolution to separate the polymer having the urethane functional group and/or the polymer having the amide functional group from the polymer material in which the polymer having the ester functional group and the at least one polymer selected from cotton, flax, rayon, silk, acrylic, polyethylene, and polypropylene are mixed; and (c) depolymerizing the polymers separated as a solid phase.

Additionally, when the mixed polymer material includes both the polymer having the urethane functional group and the polymer having the amide functional group, the depolymerization method may further include, after step (c): (d) controlling the temperature of the mixture containing the separated polymers having the urethane functional group and the amide functional group to precipitate only the polymer having the amide functional group, followed by separating the polymer having the urethane functional group; and (e) subsequently depolymerizing the separated polymer having the urethane functional group.

When the mixed polymer material includes the polymer having the urethane functional group but does not include the polymer having the amide functional group, the depolymerization method may further include: (e) depolymerizing the separated polymer having the urethane functional group, without performing step (d).

As one embodiment of the present disclosure, the polymers depolymerized in step (c) may include the polymer having the ester functional group. In this case, the depolymerization of the polymer having the ester functional group in step (c) may be carried out by at least one depolymerization method known to date, including hydrolysis, glycolysis, methanolysis, ethanolysis, ammonolysis, and aminolysis.

When the solid-phase polymers separated in step (c) further include non-depolymerizable materials, such materials may be separated from the reaction product by relatively simple methods such as filtration or centrifugation.

Additionally, as one embodiment of the present disclosure, the depolymerization of the polymer having the urethane functional group in step (e) may be carried out by adding a depolymerization catalyst for the polymer having the urethane functional group to the filtrate obtained after filtration.

The depolymerization catalyst may be at least one selected from the group consisting of metal catalysts such as alkali metal hydroxides, alkaline earth metal hydroxides, alkali metal acetates, alkaline earth metal acetates, alkali metal carbonates, alkali metal bicarbonates, alkaline earth metal carbonates, and alkali metal oxides; and guanidine-based or amine-based organic compounds.

In the depolymerization composition, the total mass ratio of the catalyst to the polymer having the urethane functional group may be in a range of 0.0001 to 0.5 times, preferably 0.001 to 0.1 times. The depolymerization temperature may be in a range of 100°C to 170°C, preferably 140°C to 165°C.

In depolymerizing the polymer having the urethane functional group, the amount of the polymer having the urethane functional group may be in a range of 1 wt% to 200 wt% relative to the total weight of the first compound and the second compound. The weight ratio of the first compound to the second compound, i.e., the weight of the first compound/the weight of the second compound, may be in a range of 0.05 to 20, preferably 0.1 to 10, and more preferably 0.5 to 2.

In step (d), after precipitation of the polymer having the amide functional group, the weight ratio of the first compound and/or the second compound relative to the polymer having the urethane functional group may be adjusted by adding the first compound and/or the second compound to the solution of the separated polymer having the urethane functional group. However, for convenience of the process, it may be more preferable to proceed with the depolymerization reaction without adding the first compound and/or the second compound.

Hereinafter, pretreatment and depolymerization methods for chemically recycling mixed polymer materials according to an embodiment of the present disclosure will be described in more detail with reference to Examples, Comparative Examples, and Experimental Examples.

Raw Material 1

A mixed textile (blended textile) containing 86 wt% polyester and 14 wt% polyurethane (spandex), which was colorless due to the absence of dyes, was cut to a square piece of approximately 2 cm per side and prepared as Raw Material 1.

Raw Material 2

A fiber composed of 100 wt% polyester, which was colorless due to the absence of dyes, was cut to a square piece of approximately 2 cm per side and prepared as Raw Material 2.

Raw Material 3

A spandex yarn composed of 100 wt% polyurethane, which was colorless due to the absence of dyes, was cut into a small piece having a length of 1 cm or less and prepared as Raw Material 3.

Raw Material 4

A mixed textile containing 86 wt% polyester and 14 wt% polyurethane (spandex), into which a black dye (dye: Dystar Dianix Deep Black Plus, weight ratio: 2.0 wt% o.w.f.) was introduced, was cut to a square piece of approximately 2 cm per side and prepared as Raw Material 4.

Raw Material 5

A mixed textile containing 86 wt% polyester and 14 wt% polyurethane (spandex), into which an azo-based red dye (dye: Disperse Red 1, weight ratio: 1.5 wt% o.w.f.) was introduced, was cut to a square piece of approximately 2 cm per side and prepared as Raw Material 5.

Raw Material 6

To the mixed textile of Raw Material 1, a polypropylene nonwoven fabric and a blend of cotton and nylon were further added to prepare Raw Material 6 with the following composition: 64.5 wt% polyester, 10.5 wt% polyurethane, 10 wt% polypropylene, 10 wt% cotton, and 5 wt% nylon. The raw material thus prepared had a maximum side length of 3 cm or less.

Raw Material 7

A mixed textile containing 75 wt% nylon (nylon 6) and 25 wt% polyurethane (spandex), into which a light lavender-colored basic dye (weight ratio: ≤2.0 wt%) was introduced, was cut to a square piece of approximately 2 cm per side and prepared as Raw Material 7.

Raw Material 8

A mixed textile containing 60 wt% cotton, 30 wt% rayon, and 10 wt% polyurethane was cut to a square piece of approximately 2 cm per side and prepared as Raw Material 8.

Raw Material 9

A mixed textile containing 75 wt% cotton, 20 wt% rayon, and 5 wt% polyurethane was cut to a square piece of approximately 2 cm per side and prepared as Raw Material 9.

Raw Material 10

A mixed textile containing 65 wt% cotton, 32 wt% rayon, and 3 wt% polyurethane was cut to a square piece of approximately 2 cm per side and prepared as Raw Material 10.

Raw Material 11

A mixed textile containing 60 wt% polyester, 35 wt% cotton, and 5 wt% polyurethane (the textile with a front side composed of a cotton-polyurethane material and a rear side composed of a polyester-polyurethane material) was cut to a square piece of approximately 2 cm per side and prepared as Raw Material 11.

Raw Material 12

A mixed textile containing 49 wt% polyester, 44 wt% Tencel, and 7 wt% polyurethane was cut to a square piece of approximately 2 cm per side and prepared as Raw Material 12.

Raw Material 13

A mixed textile containing 54 wt% polyester, 38 wt% nylon (nylon 6,6), and 8 wt% polyurethane was cut to a square piece of approximately 2 cm per side and prepared as Raw Material 13.

Raw Material 14

20 wt% each of Raw Material 8 and Raw Material 12, 40 wt% Raw Material 13, and 10 wt% each of silk and acrylic fibers, each cut to a square piece of approximately 2 cm per side, were blended to prepare Raw Material 14.

**<Selective Dissolution of Polyurethane from Mixed Polymer Material>**

Example 1

(a) Selective Dissolution of Polyurethane: A mixed solvent was prepared using 35 g of anisole as a first compound and 60 g of ethylene glycol as a second compound. The mixed solvent was charged into a 250 mL vessel (autoclave) designed to withstand high pressure, and then heated while maintaining the internal temperature of the vessel at 150°C under PID control. After the temperature stabilized, 10 g of the mixed textile prepared as Raw Material 1 was introduced into the vessel, and the mixture was stirred at a speed of 350 rpm or higher using an overhead stirrer equipped with a PTFE impeller. When the desired contact time between the textile and the mixed solvent was reached, an inlet of the vessel was opened, and the remaining fibers were taken out using a tweezer. The recovered fibers were dipped in approximately 50 mL of a pre-prepared ethanol solution in a vial bottle for washing, and then transferred to a glass evaporating dish. Subsequently, the washed fibers were placed in a vacuum dryer maintained at a reduced pressure ($\leq 2$ mmHg) by a vacuum pump and at a temperature of 60°C by an internal heater, followed by drying for 12 hours or longer.

(b) Measurement of Polyurethane Content in Mixed Polymer Material: Through contact with the mixed solution composed of the first compound and the second compound, polyurethane was dissolved from the mixed polymer fiber and released as a liquid phase. The extraction ratio of polyurethane was estimated by measuring the polyurethane content remaining in the textile sample. For this purpose, 30 mg of the mixed polymer textile sample was uniformly dissolved in 0.7 mL of a mixed solvent composed of trifluoroacetic acid-d (TFA-d) and dichloromethane-$d_2$ ($CD_2Cl_2$) at

a weight ratio of 1:10. Subsequently, a $^1$H-NMR spectrum was measured using nuclear magnetic resonance spectroscopy (model: Bruker AVANCE II+ 500 MHz). The polyurethane content was estimated from the relative integral area ratios of characteristic peaks observed in the spectrum. Prior to this analysis, calibration samples (samples having polyurethane mass fractions of 0%, 4%, 8%, 12%, 16%, and 20%) were prepared by varying the mass ratio of Raw Material 2 (100% polyester) and Raw Material 3 (100% polyurethane). $^1$H-NMR spectra were measured for these calibration samples, and a calibration curve was constructed by correlating the relative integral area ratios of characteristic peaks of polyester ($\delta$ (ppm) = 8.16, 4.79, 4.63, 4.19, and 4.11) and characteristic peaks of polyurethane ($\delta$ (ppm) = 7.26, 7.19, 3.67, 3.47, 1.78, 1.70, 1.41, 1.30, 0.44, and 0.14) as a function of the mass ratio of the constituent polymers.

The fraction of polyurethane removed from the mixed polymer material by selective dissolution was calculated according to the following equation.

-

$$\text{PU extraction ratio; } X_{PU} (\%) = 100 - (M_{PU}/M_{PU,0}) \times 100 \qquad \text{(Equation 1)}$$

In Equation 1, $M_{PU,0}$ denotes the initial mass of polyurethane contained in the mixed polymer material, and MPU denotes the mass of polyurethane remaining in the mixed polymer material without being selectively dissolved after contact with the mixed solution composed of the first compound and the second compound.

(c) Separation and Recovery of Each Polymer: After determining, based on the procedure described in (b), that selective dissolution of polyurethane had been completed by bringing the mixed polymer material into sufficient contact with the mixed solution composed of the first compound and the second compound according to the procedure of (a), the mixture inside the pressure vessel containing the undissolved fibers and the solution in which polyurethane had been dissolved was filtered using a PTFE membrane filter (pore size: 0.45 $\mu$m). The fibers that remained undissolved were collected on the filter, and the filtrate was transferred to a separatory funnel, followed by induction of liquid-liquid phase separation. The separated phases were divided into an upper organic solvent phase in which the first compound was present at a high concentration and a lower hydrophilic solvent phase in which the second compound was present at a high concentration. Most of the dissolved polyurethane remained mixed with the organic solvent phase in the form of a white, turbid solution. After separating the phases, excess n-hexane and water were added to further promote clear phase separation, thereby separating and removing the first compound and the second compound. The final product was transferred to a 50 mL flask, after which the organic solvent present in the organic phase was removed using a rotary evaporator, thereby recovering white solid polyurethane.

(d) Characterization of Separated Polymers: Each of the separated polymers was subjected not only to the $^1$H-NMR analysis described in (b), but also to structural characterization using an attenuated total reflectance Fourier-transform infrared spectrometer (ATR/FT-IR; Bruker ALPHA II). As polyurethane was dissolved through contact with the mixed solution of the first compound and the second compound, the polymer material remained in a solid phase was observed to lose its elasticity. Changes in the morphology of the textile material were observed using a stereomicroscope (model: Olympus SZ61).

Example 2

Except that the amount of anisole used as the first compound was increased to 70 g (i.e., doubled), each polymer was separated from the mixed polymer material by selective dissolution of polyurethane in the same manner as in Example 1, and the characteristics thereof were analyzed.

Comparative Example 1

Except that, in preparing the mixed solvent, anisole corresponding to the first compound was used alone in an amount of 70 g instead of using together anisole as the first compound and ethylene glycol as the second compound, each polymer was separated from the mixed polymer material by selective dissolution of polyurethane in the same manner as in Example 1, and the characteristics thereof were analyzed.

Comparative Example 2

Except that 70 g of ethylene glycol corresponding to the second compound was used alone instead of using together anisole as the first compound and ethylene glycol as the second compound, each polymer was separated from the mixed polymer material by selective dissolution of polyurethane in the same manner as in Example 1, and the characteristics thereof were analyzed.

Table 1 illustrates the proportion of polyurethane removed from a mixed polymer material composed of polyester and polyurethane as a function of time after bringing the raw material into contact with the first compound and/or the second compound at a temperature of 150°C, followed by selective dissolution. The mixed polymer material of Raw Material 1 used herein is a blended textile material in the form of a woven fabric in which yarns composed of polyester and polyurethane are interlaced in the weft (transverse) and warp (longitudinal) directions. It is known that disentangling such a woven blended material into individual components or physically separating the constituent materials in a complete manner, is technically difficult to implement. Accordingly, the present disclosure proposes a recycling method in which one constituent component of the mixed material is selectively and fully dissolved to convert the mixed material into different phases, followed by physical separation of the respective phases. In particular, a method for selectively dissolving polyurethane may be employed, and in this case, the solvent used is advantageously a mixture of two compounds having different chemical structures, as shown in Examples 1 and 2 of Table 1, rather than a solvent of a single compound.

Among these, the first compound exhibits strong interactions with a hard segment of polyurethane, which is responsible for maintaining strong cohesive force and thermodynamic stability adjacent to the urethane linkage. The second compound, on the other hand, has high affinity for a soft segment that forms a flexible polymer chain and impart elasticity. Accordingly, when the first compound and the second compound are used in combination, a synergistic effect may be achieved. As the first compound, an aromatic compound having an alkoxy functional group capable of strongly interacting with the hard segment and urethane linkage of polyurethane may be selected. As the second compound, an alcohol compound expected to have high thermodynamic affinity with polyols constituting the soft segment may be appropriately selected, thereby significantly increasing solubility. The results shown in Table 1 clearly demonstrate these effects.

Table 1

| Classification | Example 1 | Example 2 | Comparative Example 1 | Comparative Example 2 |
|---|---|---|---|---|
| Amount of Anisole* (g) | 35 | 70 | 70 | 0 |
| Amount of EG** (g) | 60 | 60 | 0 | 70 |
| Contact time (min) | Removal efficiency of PU from mixed material (%) | | | |
| 0 | 0.0 | 0.0 | 0.0 | 0.0 |
| 5 | 8.1 | 68.2 | *** | *** |
| 10 | 30.2 | 96.5 | *** | *** |
| 20 | 49.1 | 100.0 | *** | *** |
| 30 | 59.9 | 100.0 | 12.6 | 10.6 |
| 60 | 80.3 | 100.0 | 16.6 | 19.7 |
| 90 | 87.4 | 100.0 | *** | *** |
| 120 | 91.7 | 100.0 | 22.8 | 40.9 |
| 150 | 95.1 | 100.0 | *** | *** |
| 180 | 96.6 | 100.0 | 29.1 | 44.6 |
| * First compound<br>** Second compound<br>*** Not measured | | | | |

Referring to the results of Comparative Examples 1 and 2, in which either anisole as the first compound alone or ethylene glycol as the second compound alone was used as the extraction solvent and brought into contact with the polyester-polyurethane mixed material, it can be seen that although selective dissolution of polyurethane partially proceeded after a contact time of 2 hours, the polyurethane removal efficiency remained below 50% even after prolonged contact, indicating that only a limited amount was dissolved. On the contrary, in Examples 1 and 2, in which the mixed solvent containing both anisole and ethylene glycol was applied, selective dissolution of polyurethane proceeded rapidly. In particular, in Example 2, in which anisole and ethylene glycol were added at similar weight ratios, all of the polyurethane was rapidly dissolved within a contact time of 20 minutes. These results clearly demonstrate that the solvent in which the first compound and the second compound are mixed together is highly effective for the selective dissolution of polyurethane.

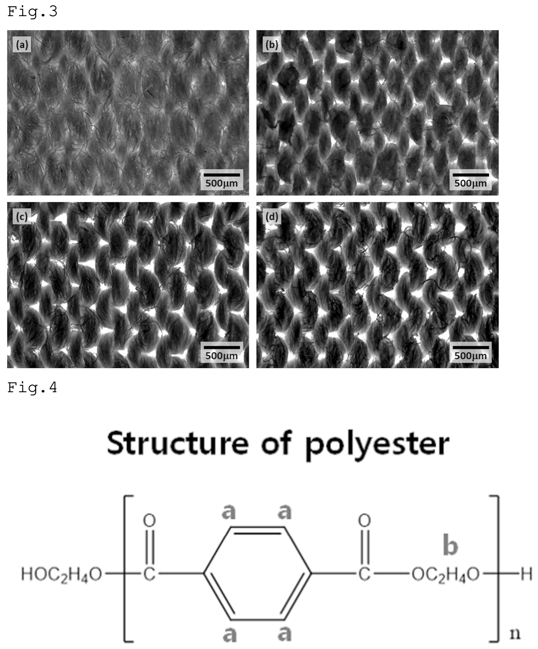

FIG. 3 illustrates stereomicroscopic images showing the morphology of the mixed polymer material of Example 1 obtained as a function of contact time. As polyurethane was selectively dissolved with increasing contact time, the mesh openings of the fabric gradually widened, transforming it into a looser fibrous structure. However, as the concentration of polyester increased, the elastic properties of the textile were observed to decrease significantly.

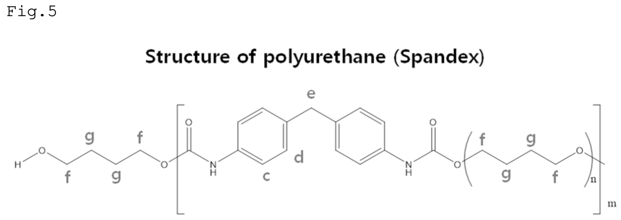

FIGS. 4 and 5 illustrate the chemical structures of polyester (Raw Material 2) and polyurethane (Raw Material 3), which correspond to the polymers constituting the mixed material of Raw Material 1, as well as the positions of protons therein.

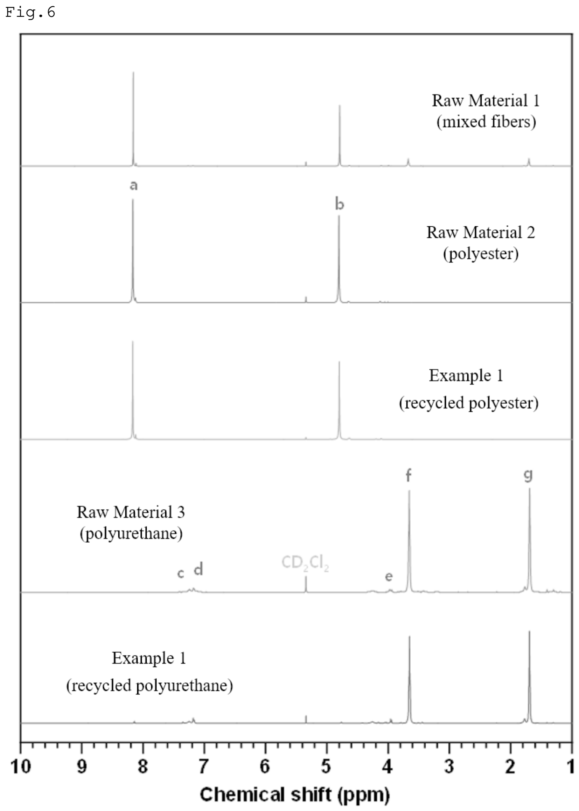

In order to investigate the structural characteristics of the polymers separated/recovered from the mixed polymer material (Raw Material 1) by selective dissolution of polyurethane according to the method of Example 1, $^1$H-NMR measurements were performed on the single-polymer materials of Raw Material 2 (polyester) and Raw Material 3 (polyurethane), and the separated polymer samples. The spectra obtained for each sample are shown comparatively in FIG. 6. It can be observed that the characteristic peaks of each separated and recovered polymer closely match the characteristic peaks of the corresponding single-polymer materials (Raw Material 2 and Raw Material 3). These results clearly demonstrate that the method of Example 1 enables highly effective separation of polymer components from the mixed polymer material through selective dissolution of polyurethane.

### <Selection of Compounds Effective for Selective Dissolution of Polyurethane>

The following Examples and Comparative Examples were conducted to identify exemplary combinations of compounds that are effective for selective dissolution of polyurethane.

### (1) Modified Examples of First Compound

#### Example 3

Except that, in preparing the mixed solvent, 1,2-dimethoxybenzene was used as the first compound instead of anisole, each polymer was separated from the mixed polymer material by selective dissolution of polyurethane in the same manner as in Example 1, and the characteristics thereof were analyzed.

#### Example 4

Except that, in preparing the mixed solvent, 1,4-dimethoxybenzene was used as the first compound instead of anisole, each polymer was separated from the mixed polymer material by selective dissolution of polyurethane in the same manner as in Example 1, and the characteristics thereof were analyzed.

#### Example 5

Except that, in preparing the mixed solvent, 1,3,5-trimethoxybenzene was used as the first compound instead of anisole, each polymer was separated from the mixed polymer material by selective dissolution of polyurethane in the same manner as in Example 1, and the characteristics thereof were analyzed.

#### Example 6

Except that, in preparing the mixed solvent, ethoxybenzene was used as the first compound instead of anisole, each polymer was separated from the mixed polymer material by selective dissolution of polyurethane in the same manner as in Example 1, and the characteristics thereof were analyzed.

#### Example 7

Except that, in preparing the mixed solvent, guaiacol was used as the first compound instead of anisole, each polymer was separated from the mixed polymer material by selective dissolution of polyurethane in the same manner as in Example 1, and the characteristics thereof were analyzed.

#### Comparative Example 3

Except that, in preparing the mixed solvent, p-xylene was used as the first compound instead of anisole, each polymer was separated from the mixed polymer material by selective dissolution of polyurethane in the same manner as in Example 1, and the characteristics thereof were analyzed.

For Examples 1 and 3 to 7 and Comparative Example 3, the effects on selective dissolution of polyurethane was compared by varying the type of the first compound in the separation of individual polymers from the mixed polymer material. In all experimental cases, only the type of the first compound was changed for performance comparison, while all other conditions were kept identical. In the Examples employed an aromatic compound having at least one alkoxy functional group, dissolution of polyurethane proceeded in a highly selective and efficient manner. In particular, 1,2-dimethoxybenzene (1,2-DMB), in which alkoxy functional groups are positioned adjacently on the aromatic ring, exhibited remarkably superior polyurethane dissolution performance. This result is presumed to arise from strong interactions between the alkoxy groups of 1,2-DMB and both the aromatic core and the symmetrically positioned urethane linkages within the hard segment of polyurethane, especially when multiple alkoxy groups are oriented in the same direction.

Meanwhile, in Comparative Example 3, the effectiveness of p-xylene, an aromatic hydrocarbon compound, as the first compound was evaluated for selectively dissolving polyurethane from the mixed material. p-Xylene is a relatively stable, low-polarity, good solvent with a boiling point of approximately 138°C, and is widely used, together with toluene, as a solvent for dissolving various polymers. p-Xylene possesses a central aromatic ring and methyl groups positioned on the periphery thereof, and thus has a molecular structure similar to that of 1,4-dimethoxybenzene used as the first compound in Example 4. However, p-xylene differs in that the functional groups directly substituted on the aromatic ring are methyl groups rather than methoxy groups. From the results of Example 4 employed 1,4-dimethoxybenzene, it was observed that when the contact time with the mixed polymer material was maintained at 150°C for 2 hours, most of the polyurethane was dissolved. On the contrary, in Comparative Example 3 employed p-xylene as the first compound, the proportion of polyurethane dissolved into the mixed solvent was observed to be less than half. These results clearly demonstrate that simply applying a combination of solvents having high affinity or expected high affinity for polymers is not necessarily effective for selectively dissolving polyurethane from the mixed material.

Table 2

| Classification | First compound | Second compound | Contact time (hr) | Contact temperature (°C) | $X_{PU}$ (%) |
|---|---|---|---|---|---|
| Example 1 | Anisole 35g | EG 60g | 2 | 150 | 91.7 |
| Example 3 | 1, 2-DMB 35g | EG 60g | 2 | 150 | 100.0 |
| Example 4 | 1,4-DMB 35g | EG 60g | 2 | 150 | 96.6 |
| Example 5 | 1, 3, 5-TMB 35g | EG 60g | 2 | 150 | 95.4 |
| Example 6 | EB 35g | EG 60g | 2 | 150 | 96.6 |
| Example 7 | Guaiacol 35g | EG 60g | 2 | 150 | 91.7 |
| Comparative Example 3 | p-Xylene 35g | EG 60g | 2 | 150 | 42.1 |

## (2) Modified Examples of Second Compound

### Example 8

Except that, in preparing the mixed solvent, diethylene glycol (DEG) was used as the second compound instead of ethylene glycol, each polymer was separated from the mixed polymer material by selective dissolution of polyurethane in the same manner as in Example 1, and the characteristics thereof were analyzed.

### Example 9

Except that, in preparing the mixed solvent, triethylene glycol (TEG) was used as the second compound instead of ethylene glycol, each polymer was separated from the mixed polymer material by selective dissolution of polyurethane in the same manner as in Example 1, and the characteristics thereof were analyzed.

### Example 10

Except that, in preparing the mixed solvent, 1-octanol was used as the second compound instead of ethylene glycol, each polymer was separated from the mixed polymer material by selective dissolution of polyurethane in the same manner as in Example 1, and the characteristics thereof were analyzed.

Comparative Example 4

Except that, in preparing the mixed solvent, n-decane was used as the second compound instead of ethylene glycol, each polymer was separated from the mixed polymer material by selective dissolution of polyurethane in the same manner as in Example 1, and the characteristics thereof were analyzed.

Table 3 illustrates a comparison of the effects on selective dissolution of polyurethane when the type of the second compound is varied in the separation of individual polymers from the mixed polymer material. In all experimental cases shown in Table 3 (Examples 1 and 8 to 10 and Comparative Example 4), only the type of the second compound was changed for performance comparison, while all other conditions were kept identical. As can be seen from the results of Examples 1 and 8 to 10, when a compound having at least one alcohol functional group (the second compound) was used in combination with an aromatic compound having an alkoxy functional group (the first compound), dissolution of polyurethane proceeded in a highly effective and selective manner. Comparable selective dissolution performance was observed not only when ethylene glycol, which has two alcohol functional groups each bonded to the terminal end of a hydrocarbon chain, was used as the second compound (Example 1), but also when diols having larger molecular structures formed by linkage of multiple diol units, such as diethylene glycol and triethylene glycol, were used as the second compound (Examples 8 and 9). In particular, even in Example 10, in which 1-octanol, having a long hydrocarbon chain with a single alcohol functional group at the terminal end, was used as the second compound, highly effective dissolution of polyurethane was achieved.

Meanwhile, as another example of the second compound, when decane, which has a chain length similar to that of 1-octanol (Example 10) but is composed solely of hydrocarbons and lacks an alcohol functional group, was used, almost no dissolution of polyurethane was observed. These results demonstrate that, in order to enhance the selective dissolution performance of polyurethane from the mixed polymer material, not only the selection of the first compound but also appropriate selection of the second compound is critically important.

Table 3

| Classification | First compound | Second compound | Contact time (hr) | Contact temperature (°C) | $X_{PU}$ (%) |
|---|---|---|---|---|---|
| Example 1 | Anisole 35g | EG 60g | 2 | 150 | 91.7 |
| Example 8 | Anisole 35g | DEG 60g | 2 | 150 | 93.2 |
| Example 9 | Anisole 35g | TEG 60g | 2 | 150 | 93.9 |
| Example 10 | Anisole 35g | 1-Octanol 60g | 2 | 150 | 96.5 |
| Comparative Example 4 | Anisole 35g | Decane 60g | 2 | 150 | 12.9 |

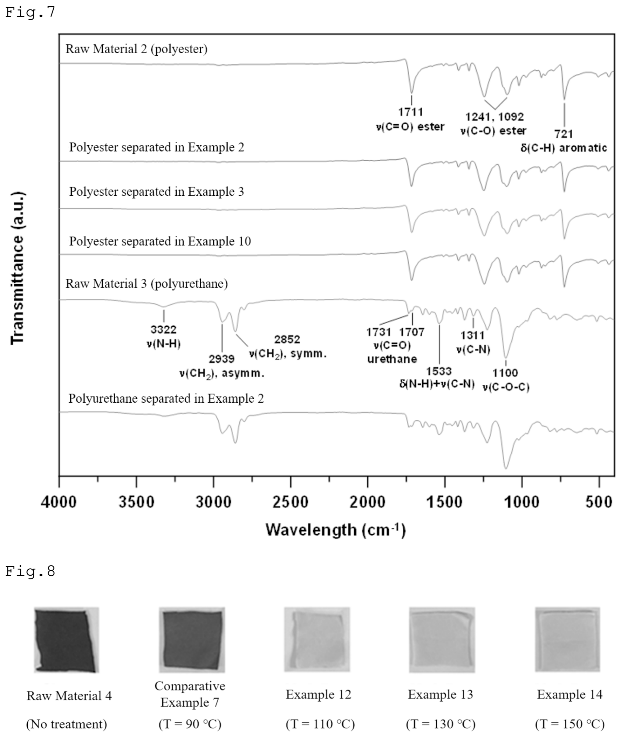

FIG. 7 illustrates a comparison of representative IR spectra measured for polyester and polyurethane separated according to the above Examples, together with those of the starting materials, namely Raw Material 2 and Raw Material 3. In order to compare the structural characteristics and compositional features of the polymers obtained by the methods of the Examples, the spectra of the polyester and polyurethane separated according to the Examples are presented alongside the spectra of Raw Material 2 and Raw Material 3, each of which corresponds to a single polymer material. The polymers separated by the methods of the Examples exhibited spectral profiles that were highly similar to those of the single polymer materials. These results clearly demonstrate that, according to the present disclosure, polyurethane can be selectively dissolved and thereby the polymer components can be effectively separated. That is, when the mixed polymer material is brought into contact with the mixed solvent composed of the first compound and the second compound under heating for a predetermined period of time, selective dissolution of polyurethane proceeds, allowing the polymer components constituting the mixed material to be separated with high efficiency. Since selective dissolution of polyurethane occurs rapidly even through simple contact, the individual polymers (polyester and polyurethane) constituting the mixed material can be completely separated from each other in a relatively simple and efficient manner.

**<Effects of Extraction Temperature on Selective Dissolution of Polyurethane>**

The following Examples and Comparative Examples were conducted to investigate the effect and influence of extraction temperature on selective dissolution of polyurethane.

Comparative Example 5

Except that the temperature inside the vessel was maintained at 90°C and stirring was carried out for 24 hours, each polymer was separated from the mixed polymer material by selective dissolution of polyurethane in the same manner as in Example 2, and the characteristics thereof were analyzed.

Example 11

Except that the temperature inside the vessel was maintained at 100°C and stirring was carried out for 24 hours, each polymer was separated from the mixed polymer material by selective dissolution of polyurethane in the same manner as in Example 2, and the characteristics thereof were analyzed.

Comparative Example 6

Except that the temperature inside the vessel was maintained at 190°C and stirring was carried out for 1 hours, each polymer was separated from the mixed polymer material by selective dissolution of polyurethane in the same manner as in Example 2, and the characteristics thereof were analyzed.

Table 4 illustrates the dissolution rate of polyurethane as a function of contact temperature in the separation of individual polymers from the mixed polymer material by selective dissolution of polyurethane. When the contact temperature was maintained at 100°C and the mixture was allowed to stand for 24 hours or longer (Example 11), slow but gradual dissolution of polyurethane was observed. On the contrary, in Comparative Example 5, when the contact temperature was lowered by 10°C to 90°C, the dissolution rate of polyurethane was observed to decrease sharply.

Meanwhile, in Comparative Example 6, in which the mixed solvent composed of the first compound and the second compound was brought into contact with the mixed polymer material while maintaining at a high temperature of 190°C, thermal degradation and oxidation of polyurethane were significantly accelerated, resulting in excessive color change (yellowing), and degradation of polyester proceeded. After exposure to the high temperature for approximately 1 hour, a portion of the liquid product (filtrate) was collected and analyzed by HPLC, revealing that partial depolymerization of the polyester had occurred. The yield of oligomers (including dimers) resulting from depolymerization of the polyester was observed to be approximately 4.1%.

Table 4

| Classification | First compound | Second compound | Contact time (hr) | Contact temperature (°C) | $X_{PU}$ (%) |
|---|---|---|---|---|---|
| Comparative Example 5 | Anisole 70g | EG 60g | 24 | 90 | 33.6 |
| Example 11 | Anisole 70g | EG 60g | 24 | 100 | 62.7 |

**<Effects of Impurity Removal by Sequential Application of First Compound and Second Compound>**

The following Examples and Comparative Examples were conducted to evaluate the effects of impurity removal from mixed polymer materials containing organic impurities other than polymers.

Comparative Example 7

Approximately 10 g of the mixed textile prepared as Raw Material 4, into which a black dye had been introduced, was added to a 250 mL flask containing 70 g of anisole (the first compound) preheated and maintained at 90°C, and the mixture was stirred at 300 rpm for approximately 5 minutes using a magnetic stirrer to extract the dye. After removal of the colored mixed solution containing the eluted dye, the textile was transferred to 70 g of anisole maintained at the same temperature and washed. The washing was repeated up to three times until no further dye elution into the anisole was observed.

The decolored mixed textile was measured using a spectrophotometer (manufacturer: Konica Minolta; model: CM-3600A), and color values were determined in terms of L* a* b* coordinates. The L* a* b* values represent coordinates in a color space standardized by the Commission Internationale de 1'Eclairage (CIE), where L* denotes lightness on a scale from 0 (black) to 100 (white), and a* and b* denote positive/negative coordinates along the red/green and yellow/blue opponent color axes, respectively. Additionally, changes in dye uptake were estimated from K/S values calculated using the Kubelka-Munk equation shown below.

-

$$K/S = (1-R)^2/(2 \times R) \quad \text{(Equation 2)}$$

Here, K represents the absorption coefficient of the dyed material, S represents the scattering coefficient, and R represents the reflectance of monochromatic light. The K/S value, which indicates the apparent dye uptake, was calculated from the reflectance of the dyed material measured at the wavelength of maximum dye absorption.

The mixture containing the mixed textile finally obtained through the washing process and approximately 70 g of anisole was introduced into a 200 mL pressure vessel (autoclave) in which 35 g of ethylene glycol, corresponding to the second compound, had been previously charged and heated to 150°C. Thereafter, each polymer was separated from the mixed polymer material by selective dissolution of polyurethane in the same manner as in Example 1, and the characteristics thereof were analyzed.

Example 12

Except that, in removing dye impurities from the colored mixed textile of Raw Material 4, the temperature of anisole used as the first compound was maintained at 110°C, dye impurities were removed in the same manner as in Comparative Example 7. Thereafter, each polymer was separated from the mixed polymer material by selective dissolution of polyurethane, and the characteristics thereof were analyzed.

Example 13

Except that, in removing dye impurities from the colored mixed textile of Raw Material 4, the temperature of anisole used as the first compound was maintained at 130°C, dye impurities were removed in the same manner as in Comparative Example 7. Thereafter, each polymer was separated from the mixed polymer material by selective dissolution of polyurethane, and the characteristics thereof were analyzed.

Example 14

Except that, in removing dye impurities from the colored mixed textile of Raw Material 4, the temperature of anisole used as the first compound was maintained at 150°C, dye impurities were removed in the same manner as in Comparative Example 7. Thereafter, each polymer was separated from the mixed polymer material by selective dissolution of polyurethane, and the characteristics thereof were analyzed.

Example 15

Except that Raw Material 5, into which a red dye had been introduced, was used as the colored mixed textile instead of Raw Material 4, and in removing dye impurities, the temperature of anisole used as the first compound was maintained at 150°C, dye impurities were removed in the same manner as in Comparative Example 7. Thereafter, each polymer was separated from the mixed polymer material by selective dissolution of polyurethane, and the characteristics thereof were analyzed.

Comparative Example 8

Except that Raw Material 5, into which a red dye had been introduced, was used as the colored mixed textile instead of Raw Material 4, and in removing dye impurities, the temperature of anisole used as the first compound was maintained at 190°C, dye impurities were removed in the same manner as in Comparative Example 7. Thereafter, each polymer was separated from the mixed polymer material by selective dissolution of polyurethane, and the characteristics thereof were analyzed.

Table 5 illustrates the color characteristics of textiles that underwent decolorization through contact with the first compound. Images of the decolorized textiles are shown in FIG. 8. In Comparative Example 7, in which the contact temperature with the first compound (anisole) was below 100°C, partial decolorization was observed. However, the K/S value remained 15 or higher, indicating a relatively high residual dye content. When the second compound was subsequently added to the mixed polymer material treated with the first compound to proceed with selective dissolution of polyurethane and filtration was performed to separate polyester, a dark-colored impurity remained in the filtrate. This residual impurity significantly affected the quality of the product subsequently obtained through depolymerization of the polyurethane.

On the contrary, when decolorization was carried out by contact with the first compound at a temperature of 100°C or higher, effective dye removal proceeded. Also, high-purity polymers suitable as feedstock for depolymerization were obtained by selectively dissolving polyurethane upon addition of the second compound. Meanwhile, in Comparative Example 8, in which decolorization was performed at an excessively high temperature, excessive color change (yellowing) was observed due to significant acceleration of thermal degradation and oxidation of polyurethane, similar to the results observed in Comparative Example 6, where the mixed solvent composed of the first compound and the second compound was maintained at 190°C and brought into contact with the mixed polymer material.

Table 5

| Classification | Contact temperature with first compound (°C) | K/S | CIE L*a*b*Color | | |
|---|---|---|---|---|---|
| | | | L* | a* | b* |
| Raw Material 4 | - | 25.72 | 15.73 | 0.18 | -1.45 |
| Comparative Example 7 | 90 | 15.64 | 25.71 | -2.82 | -14.31 |
| Example 12 | 110 | 0.33 | 73.76 | -0.45 | 2.76 |
| Example 13 | 130 | 0.20 | 77.88 | 2.22 | 5.80 |
| Example 14 | 150 | 0.16 | 79.48 | 3.00 | 6.79 |
| Raw Material 5 | - | 18.01 | 40.02 | 51.12 | 29.92 |
| Example 15 | 150 | 0.08 | 90.98 | 4.50 | 7.62 |

**<Depolymerization of Mixed Material or Polymers Separated Therefrom>**

Example 16

(i) Depolymerization of Polyester: In separating the mixed material according to the method of Example 2, the fibers retained on the filter after dissolved polyurethane was removed as the filtrate through the filtration in step (c) were charged into a three-neck flask in an amount of approximately 10 g on a dry basis, together with 22.5 g of anisole (corresponding to 4 moles per mole of terephthalate repeat unit in the polymer) and about 38.8 g of ethylene glycol (corresponding to 12 moles per mole of terephthalate repeat unit in the polymer). After a reflux condenser was mounted under atmospheric pressure, stirring was commenced using a magnetic stirrer. When the reaction mixture reached the reflux temperature of the first compound (153°C), approximately 0.20 g of potassium acetate catalyst was added to initiate the catalytic reaction. The reaction was then allowed to proceed for 2 hours with continuous stirring, while maintaining the reaction temperature within $\pm 1°C$, using a condenser having one end exposed to atmospheric pressure. Upon completion of the reaction, a trace of the reaction mixture was taken and prepared as a sample for quantitative analysis. The reaction yields of depolymerized monomers and dimers were measured using high-performance liquid chromatography (HPLC with a C18 column and a UV detector ($\lambda$=254 nm)), calibrated with each standard sample.

(ii) Analysis of Depolymerization Products: For HPLC analysis, a mixed solution of methanol and water at a volume ratio of 70:30 was used as the mobile phase, and the total flow rate was maintained at 0.7 mL/min. Except for the trace of sample taken for quantitative analysis, the entire reaction mixture was filtered using cellulose filter paper (pore size: 3 $\mu$m). As a result, solid-phase compounds other than monomers, including dimers, oligomers, and unreacted polymers, were collected as solid residues on the filter paper. The yields of the products present in the reaction mixture were calculated according to the following equations.

-

$$\text{Monomer yield, } Y_{BHET}(\%) = M_{BHET}/M_0 \times 100 \quad \text{(Equation 3)}$$

-

$$\text{Dimer yield, } Y_{Dimer}(\%) = M_{Dimer}/M_0 \times 100 \quad \text{(Equation 4)}$$

-

$$\text{Oligomer yield, } Y_{Oligomer}(\%) = M_{Oligomer}/M_0 \times 100$$

$$\text{(Equation 5)}$$

-

$$\text{Byproduct (MHET) yield, } Y_{MHET}(\%) = M_{MHET}/M_0 \times 100$$

(Equation 6)

Here, $M_{BHET}$, $M_{Dimer}$, $M_{Oligomer}$, $M_{MHET}$ represent the number of moles of terephthalate functional groups contained in BHET, dimers, oligomers, and MHET, respectively, as quantified by HPLC, and $M_0$ represents the number of moles of repeat units in the polymer structure introduced into the reaction.

(iii) Recovery of Depolymerization Products: After adding 100 mL of distilled water to the depolymerization reaction mixture, the reaction solution containing monomers was allowed to stand for 12 hours in a reservoir maintained at 4°C. The crystallized solid phase was then collected by filtration using cellulose filter paper (pore size: 3 μm) to remove excess moisture, thereby obtaining a solid. The resulting solid was subsequently transferred to a vacuum dryer maintained at 60°C and dried in vacuo for at least 12 hours to yield a monomer product.

Example 16 corresponds to a depolymerization reaction (glycolysis) performed by adding a catalyst and a reaction solvent to the polyester separated according to the method of Example 2. In conducting the depolymerization of the separated polyester, the distribution of the depolymerization products obtained after a reaction time of 2 hours is shown in Table 6. Dominant degradation of the polyester fiber occurred within the first 30 minutes of reaction, and after 2 hours of reaction, complete depolymerization was achieved, with no unreacted polyester detected. It is known that the product yield after glycolysis of polyester is determined by the reaction equilibrium between the monomer BHET and oligomers including dimers. The yields (Table 6) of the products resulting from the depolymerization of the polyester separated from the mixed polymer material (Example 16), were observed to be very similar to the distribution of the products resulting from the glycolysis of a single-component material (relatively clean PET flakes or polyester).

Table 6

| Conversion rate (%) , $X_{Poly}$ | Product yield (%) | | | |
|---|---|---|---|---|
| | $Y_{BHET}$ (%) | $Y_{Dimer}$ | $Y_{Oligomer}$ | $Y_{MHET}$ |
| 100.0 | 87.9 | 5.4 | 5.7 | 1.0 |

As a result of HPLC analysis of the solid product obtained through purification and recovery of the depolymerization products in step (c) of Example 16, it was confirmed that a high-purity BHET product with a purity of 99.2% was finally obtained.

Example 17

(i) Depolymerization of Polyurethane: In separating the mixed material according to the method of Example 2, approximately 131 g of the mixture containing polyurethane, which was separated as the filtrate through the filtration in step (c), was placed in a heating bath filled with high-temperature methyl phenyl silicone oil, the temperature of which was maintained at a constant level by a PID temperature controller. The mixture was stirred at 250 rpm until the internal temperature of the reactor reached 150°C. After the reactor temperature had stabilized, 0.2 g of sodium hydroxide (KOH) was added as a catalyst to initiate the reaction. To determine completion of the depolymerization, ATR/FT-IR analysis (Bruker ALPHA II) was performed on the polyurethane of Raw Material 3, poly-tetrahydrofuran (PTHF; Sigma-Aldrich, number-average molecular weight (Mn): ~ 2,000) having the same structure as the polyol used in polyurethane synthesis, and a recycled polyol obtained by withdrawing a portion of the reaction mixture during the depolymerization process. The depolymerization endpoint was determined by comparative analysis of the resulting spectra.

(ii) Recovery of Reaction Solvent

After maintaining the internal temperature of the reactor at 150°C for 2 hours, the reactor was removed from the heating bath to terminate the reaction. When the temperature decreased to 100°C or lower and the phase boundary became clearly observable, the lower phase, containing unreacted ethylene glycol and a large portion of the catalyst, was recovered using a separatory funnel. The organic compounds separated as the upper phase were transferred to a 100 mL evaporation flask of known tare weight and quantified gravimetrically.

(iii) Recovery of Polyol Product

The 100 mL evaporation flask containing the separated upper-phase mixture was mounted on a rotary evaporator and rotated at 150 rpm while being continuously contacted with the heating bath maintained at 65°C. Under reduced pressure (10 torr), evaporation was carried out for approximately 1 hour to completely remove the distillate. The residue remaining in the rotary evaporator, consisting of approximately 1 g of a pale yellow, highly viscous liquid, was collected as a polyol product.

(iv) Characterization of Polyol Product

To analyze the bonding structure of functional groups in the recycled polyol ultimately produced through the depolymerization and solvent separation processes, a portion of the product was collected as an ATR sample and subjected to FT-IR analysis.

Meanwhile, $^1$H-NMR spectroscopy was used to compare the structural characteristics of the polyol polymer (PTHF) used in polyurethane synthesis with those of the recycled polyol resulting from depolymerization. For this purpose, 30 mg of each sample was uniformly dissolved in 0.7 mL of a mixed solvent composed of trifluoroacetic acid-d (TFA-d) and dichloromethane-d$_2$ (CD$_2$Cl$_2$) at a weight ratio of 1:10.

Example 18

Except that 15 g of Raw Material 6 was used instead of Raw Material 1 as the colored mixed polymer material, each polymer was separated from the mixed polymer material by selective dissolution of polyurethane in the same manner as in Example 2, and the characteristics thereof were analyzed. In separating the mixed material according to the method of Example 2, the polymer material retained on the filter through the filtration in step (c) (approximately 13.3 g on a dry basis) was subjected to a depolymerization reaction in the same manner as in Example 16, thereby obtaining depolymerization products including a glycolysis monomer (BHET).

After completion of the reaction, during the filtration process, the residues on the filter paper contained not only solid-phase compounds other than monomers, including dimers, oligomers, and unreacted polymers, but also polypropylene, cotton, and nylon. The recovered polypropylene and cotton exhibited morphologies substantially similar to their original forms in Raw Material 6, with approximately 3.7 g being recovered, corresponding closely to the initial input mass.

Example 19

Except that, in separating the mixed material according to the method of Example 2 in Example 18, 0.2 g of potassium carbonate (K$_2$CO$_3$) was added as a catalyst instead of potassium hydroxide (KOH) to the liquid mixture (approximately 131 g) containing polyurethane, which was separated as the filtrate through the filtration in step (c), a depolymerization reaction and analysis were carried out in the same manner as in Example 17. After removal of the first compound and the second compound from the depolymerization products of the dissolved polyurethane, approximately 1.1 g of a pale yellow recycled polyol product was obtained.

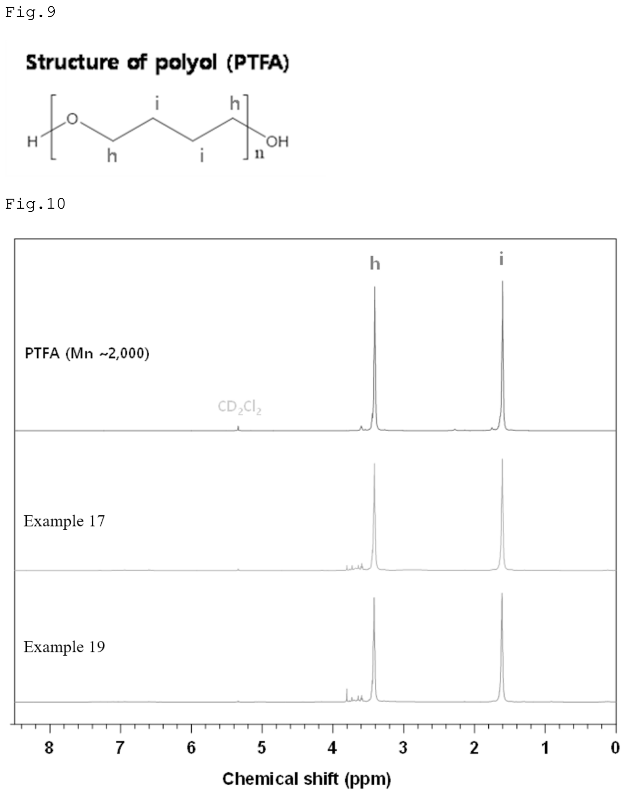

FIG. 9 illustrates the chemical structure of a polyol expected to be obtained by depolymerizing polyurethane separated from the mixed polymer material of Raw Material 1, together with the positions of protons therein. This structure also represents the general chemical structure of polytetrahydrofuran (PTHF), which is commonly used as a raw material for spandex designed to exhibit high elasticity in blended fibers.

FIG. 10 illustrates a comparison of the $^1$H-NMR spectra of (i) polyols obtained by depolymerizing polyurethane separated from the mixed polymer materials (Examples 17 and 19) and (ii) a PTHF reagent having a number-average molecular weight of approximately 2,000. The spectra were found to be highly similar to each other, indicating that the polyol products obtained through separation and depolymerization of polyurethane from the mixed polymer materials possess the same chemical structure as PTHF, which is the polyol raw material used for polyurethane synthesis.

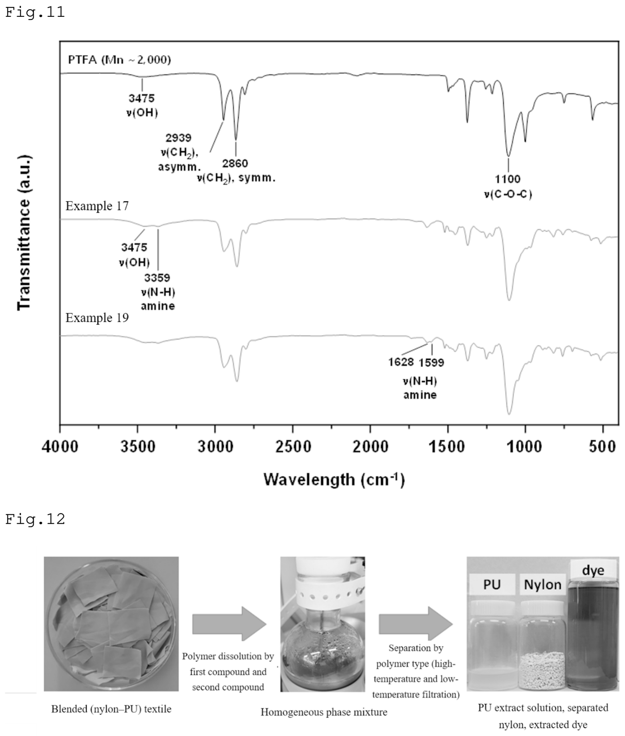

FIG. 11 illustrates a comparison of the IR spectra obtained by ATR analysis of (i) portions of the polyol products obtained through depolymerization (Examples 17 and 19) and (ii) PTHF supplied by a commercial manufacturer, which were taken as reference samples. The polyol products obtained by depolymerization of polyurethane exhibited characteristic peaks highly similar to those of PTHF. Meanwhile, in the products obtained from polyurethane depolymerization, weak characteristic peaks attributable to amine functional groups were observed. These signals may arise from trace amounts of amine impurities introduced into the depolymerization products, or from residual urethane linkages detectable as characteristic peaks when a small portion of oligomeric intermediates remains due to incomplete depolymerization of polyurethane. Such trace impurities are typically removed in the course of polyurethane synthesis, or, even when they partially remain, do not significantly affect polymerization performance in resynthesis of the material.

**<Separation and Recovery of Polyurethane and Nylon from Mixed Polymer Material>**

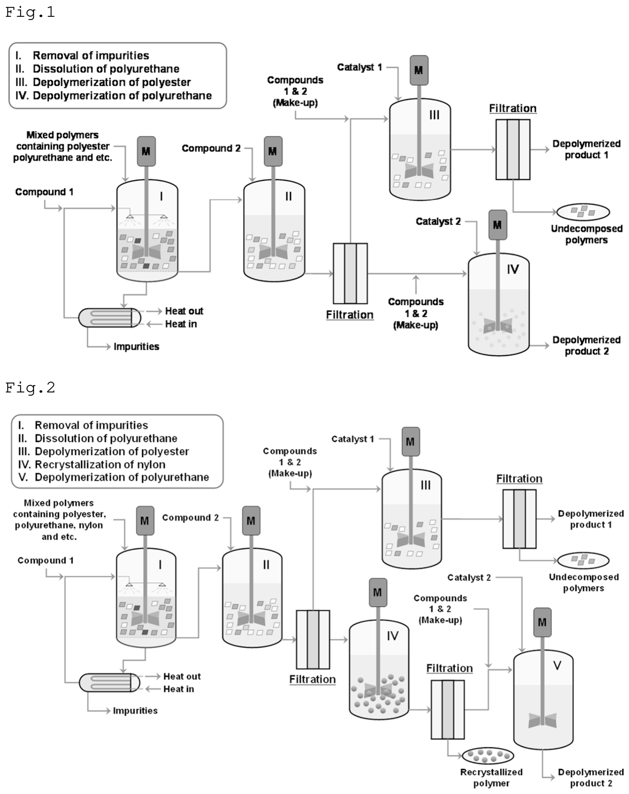

The following Example 20 was conducted to illustrate a process for separately recovering polyurethane and nylon when both polymers are present in a mixed polymer material. FIG. 2 schematically illustrates the overall process for separating such a mixed polymer material and chemically recycling polymers that are amenable to depolymerization.

Example 20

Approximately 15 g of the nylon (nylon 6)-polyurethane mixed polymer material (Raw Material 7) was treated according to the method of Example 1, except that the amount of anisole used as the first compound was increased to 70 g (twice the amount used in Example 1) to perform dissolution. When the mixed polymer material was brought into contact with the heated mixed solution of the first compound and the second compound, complete dissolution of not only the polyurethane but also the nylon was observed. In this example, instead of allowing the mixed solution containing dissolved polyurethane and nylon to stand at room temperature or simply lowering the temperature followed by filtration as in step (c) of Example 1, a two-step filtration process was employed. First, primary filtration was carried out at an elevated temperature of 135°C or higher while maintaining the solution in a fully dissolved state. Unlike Example 18, maintaining the filtration temperature at 135°C or higher allowed the entire solution to pass through the filter paper. Subsequently, the filtrate was allowed to cool naturally, and rapid precipitation of nylon occurred when the temperature dropped below 130°C. After confirming that no further precipitation occurred, secondary filtration was carried out to separately obtain an extract containing polyurethane and a solid fraction containing nylon. The solid obtained as a filter cake was washed with acetone, whereby most of the dye components were removed, resulting in the recovery of 11.3 g of a nearly white nylon material. The polyurethane-containing extract was then subjected to a depolymerization reaction in the same manner as in Example 17, yielding approximately 2.5 g of a polyol as the final product.

FIG. 12 illustrates the morphology of the nylon-polyurethane mixed polymer material used in Example 20 and the intermediate and final products generated during the process of separating and recovering each polymer according to the procedure of Example 20.

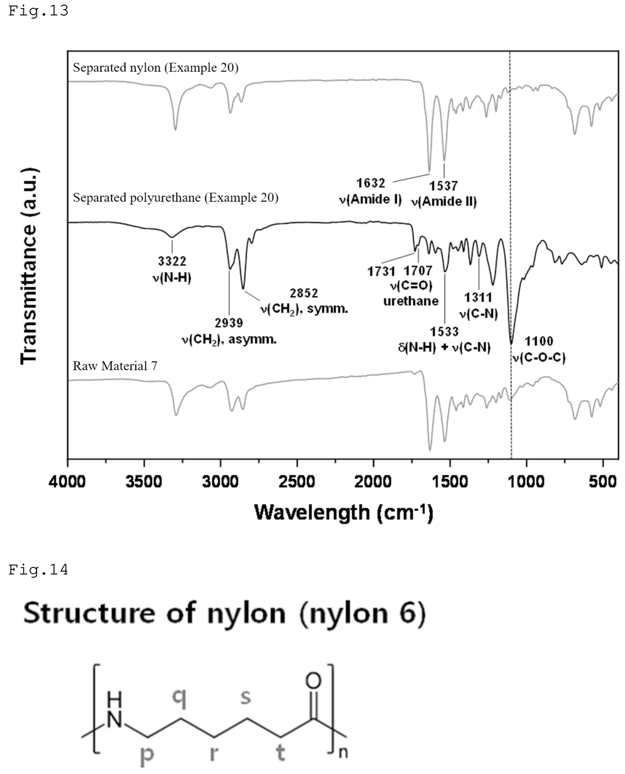

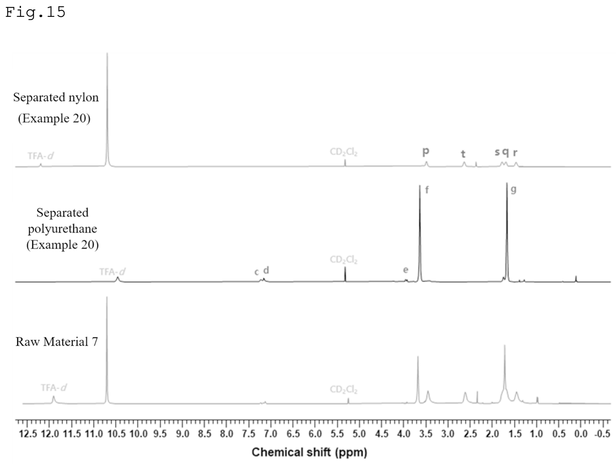

Each separated polymer was observed to exist as a stable phase even after prolonged standing. A portion of the mixed solution containing polyurethane, obtained as the filtrate in the secondary filtration step of Example 20, was collected, and the solvent was completely removed to obtain a highly viscous material, which was then prepared as a polyurethane sample for analysis. To examine the presence of foreign substances or cross-contamination with other polymer components in each separated polymer, FT-IR and $^1$H-NMR analyses were performed on the respective products. The results of these analyses are shown in FIGS. 13 and 15, respectively.

In FIG. 13, the FT-IR spectrum of Raw Material 7 exhibits a mixed pattern in which the characteristic absorption peaks of nylon and polyurethane are superimposed. The FT-IR spectra of nylon and polyurethane separated individually show patterns that are highly consistent with previously reported spectra, as well as with the spectrum of polyurethane (or pristine spandex) obtained in Example 2. However, due to partial similarities in the chemical structures of nylon and polyurethane, it was found that a simple comparison of their FT-IR spectra alone is insufficient for quantitatively interpreting the impurity content or the degree of cross-contamination within each polymer.

FIG. 15 illustrates a comparison of the $^1$H-NMR spectra of Raw Material 7 and each polymer separated during the selective dissolution process of Example 20. Comparing the spectra measured for Raw Material 7 with those of the polymer materials individually separated therefrom, it can be observed that, unlike Raw Material 7, each separated material exhibit only distinct characteristic peaks corresponding to its own chemical structure, without no overlapping or cross-appearing characteristic peaks originating from the other polymer. Furthermore, no unidentified peaks were observed other than those originating from the solvent used for the measurement. This indicates that the separated polymers possess a high level of purity.

**<Separation and Depolymerization of Single Polymers from Mixed Polymer Materials with Various Compositions>**

The following Examples 21 to 27 illustrate cases in which nylon and/or polyurethane are separated from mixed polymer materials containing nylon and/or polyurethane in accordance with the method of Example 20, followed by depolymerization of the polymers that are suitable for chemical recycling to produce recycled monomers or recycled raw materials.

Example 21

Except that Raw Material 8 was used instead of Raw Material 7, polyurethane was separated by selective dissolution in the same manner as in Example 20. Thereafter, regardless of the presence or absence of polyester, the obtained residual polymer materials were subjected to depolymerization reaction conditions in the same manner as in Example 16. The morphology changes and chemical structures of each resulting polymer product were analyzed using a stereomicroscope, FT-IR, and $^1$H-NMR spectroscopy. Meanwhile, the separated mixture containing polyurethane was subjected to a depolymerization reaction in the same manner as in Example 17.

Example 22

Except that Raw Material 9 was used instead of Raw Material 8, polyurethane was separated by selective dissolution in the same manner as in Example 21. Each separated material was then subjected to a depolymerization reaction, followed by analysis of the resulting products.

Example 23

Except that Raw Material 10 was used instead of Raw Material 8, polyurethane was separated by selective dissolution in the same manner as in Example 21. Each separated material was then subjected to a depolymerization reaction, followed by analysis of the resulting products.

Example 24

Except that Raw Material 11 was used instead of Raw Material 8, polyurethane was separated by selective dissolution in the same manner as in Example 21. Each separated material was then subjected to a depolymerization reaction, followed by analysis of the resulting products.

Example 25

Except that Raw Material 12 was used instead of Raw Material 8, polyurethane was separated by selective dissolution in the same manner as in Example 21. Each separated material was then subjected to a depolymerization reaction, followed by analysis of the resulting products.

Example 26

Except that Raw Material 13 was used instead of Raw Material 8, polyurethane and nylon (nylon 6,6) were individually separated by selective dissolution in the same manner as in Example 21. Each separated material was then subjected to a depolymerization reaction, followed by analysis of the resulting products.

Example 27

Except that Raw Material 14 was used instead of Raw Material 8, polyurethane and nylon were individually separated by selective dissolution in the same manner as in Example 21. Each separated material was then subjected to a depolymerization reaction, followed by analysis of the resulting products.

In Examples 21 to 26, nylon and polyurethane could be separated with high purity through selective dissolution in the same manner as described in Example 20. When the residual polymer mixture was subjected to depolymerization, only polyester underwent selective depolymerization. Among the raw material compositions used in these examples, fibers such as cotton, rayon, and Tencel did not dissolve in the mixed solvent composed of the first compound and the second compound, nor were they decomposed by the depolymerization process (glycolysis). Accordingly, these fibers were released as a solid phase while substantially retaining their original polymeric morphology present in the raw materials.

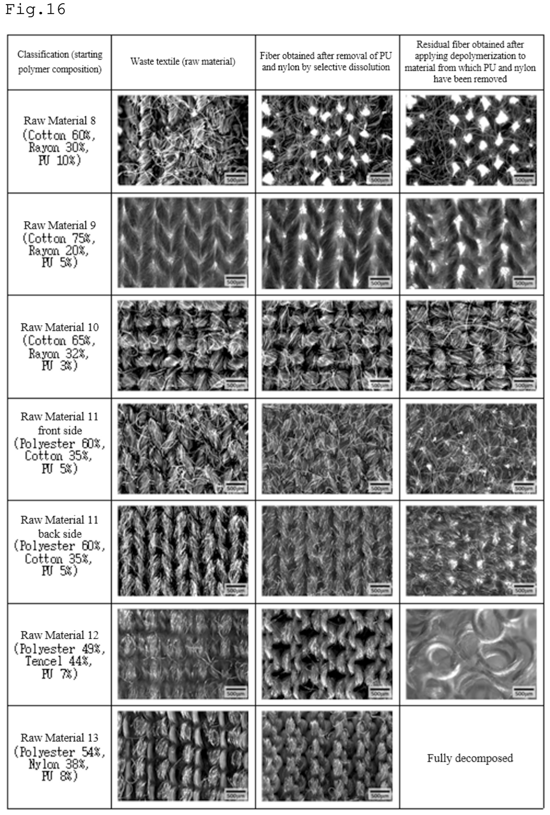

FIG. 16 illustrates polymers obtained by subjecting the mixed textile feedstocks corresponding to Raw Material 8 to Raw Material 13 to selective dissolution and depolymerization in accordance with the methods of Examples 21 to 26. Specifically, the figure shows, at an enlarged magnification under a stereomicroscope, both polymers obtained after nylon and polyurethane were selectively dissolved and removed by treatment with the mixed solvent composed of the first compound and the second compound, and residual polymers subsequently obtained after the mixture was further subjected to depolymerization conditions for polyester.

Raw Material 8 to Raw Material 10 differ in their polyurethane content. Depending on the initial polyurethane content, significant differences were observed in the elasticity and morphological deformation of the polymers after selective dissolution. In the case where Raw Material 8 with a relatively high polyurethane content was used as the raw material (Example 21), the fibrous structure from which the polyurethane had been selectively removed exhibited a substantial loss of elasticity, and large voids were formed in regions previously occupied by the polyurethane. On the contrary, in the case where Raw Material 10 with a relatively low polyurethane content was used (Example 22), even after exposure to selective dissolution and depolymerization conditions, little change in the fiber morphology was observed. This is attributed to the low polyurethane content and the absence of polyester in the raw material, so that the fibers remained substantially unchanged under both selective dissolution and depolymerization conditions.

In the case where Raw Material 11 was applied (Example 24), the textile was a laminated structure in which the front side and the back side were composed of different materials, each containing polyurethane (the front side consisted of a cotton-polyurethane material and the back side consisted of a polyester-polyurethane material). When polyurethane was extracted through the selective dissolution process, only a slight degree of deformation was observed. However, when the polymer remaining after removal of polyurethane was subjected to depolymerization conditions, the polyester was fully decomposed, so that only a material composed of a single component (cotton) was left exposed on both sides. This indicates that a polymer composed of a single component, namely cotton, was ultimately obtained.

In the case where Raw Material 12 was applied (Example 25), a different fiber morphology was observed as a result of the removal of polyurethane. When the polyester was subjected to depolymerization, the polymers that initially constituted the majority of the fibers, namely polyurethane and polyester, were completely removed through selective dissolution and depolymerization. As a result, only the unreacted polymer (Tencel) remained, which was recovered in the form of disentangled continuous long fiber.

In the case where Raw Material 13 was applied (Example 26), selective dissolution led to the extraction of polyurethane and nylon, thereby revealing the knitted structure formed by polyester. Upon the subsequent exposure to depolymerization conditions, all polymers were decomposed, leaving no residual material.

In Example 27, the mixed polymer material (Raw Material 14) having a highly diverse composition was used in which all polymers contained in the raw materials employed in Examples 21 to 26 were included, and additionally, silk and acrylic fibers were further incorporated. As in the previously conducted examples, nylon and polyurethane were sequentially separated by using the mixed solvent composed of the first compound and the second compound, after which depolymerization conditions were applied to the remaining polymers. As a result, all materials that remained unseparated or undecomposed after selective dissolution and depolymerization in the preceding examples, namely cotton, rayon, and Tencel, as well as the additionally incorporated acrylic and silk fibers, were obtained as residual polymer compounds.

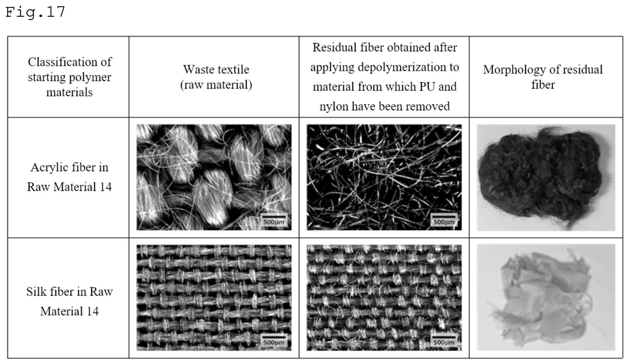

FIG. 17 illustrates stereomicroscopic images of acrylic and silk fibers contained in Raw Material 14, as well as acrylic and silk fibers recovered as residual polymers, together with images illustrating the morphology of the residual fibers obtained after depolymerization. The acrylic fibers were originally supplied in a poorly consolidated textile form, and during the depolymerization process, the fibers became loosened and were recovered in an entangled state. On the contrary, the silk fibers remained in an almost unchanged fibrous morphology.

When the acrylic fibers and the silk fibers were each used alone, the ratio of the final recovered fiber mass to the initially charged mass was measured to be 95% or higher. Considering that no erosion or surface degradation was observed in the polymer filaments themselves, such a slight decrease in mass is presumed not attributable to chemical degradation of the polymers caused by selective dissolution or depolymerization, but rather from physical losses that occurred during the polymer separation and depolymerization experimental procedures. Accordingly, it can be concluded that the acrylic and silk fibers exhibit virtually no solubility in the mixed solvent composed of the first compound and the second compound, and also show no reactivity in the subsequent depolymerization (glycolysis) process applied to the mixed polymer material.

Although the present disclosure has been described with reference to examples, the examples are presented only for illustrative purposes. It will be appreciated by those skilled in the art that various modifications and equivalents may be made to the examples. Accordingly, the technical scope of technical protection of the present disclosure should be defined by the appended claims.

## Claims

1. A composition for selectively dissolving and separating a polymer having a urethane functional group and/or a polymer having an amide functional group from a mixed polymer material,

   wherein the mixed polymer material is a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material, and

wherein the composition comprises: at least one first compound selected from aromatic compounds having at least one alkoxy functional group; and at least one second compound selected from compounds having at least one alcohol functional group.

2. The composition of claim 1, wherein a weight ratio of the first compound to the second compound is in a range of 0.01 to 100.

3. A method for selectively dissolving and separating a polymer having a urethane functional group and/or a polymer having an amide functional group from a mixed polymer material,

wherein the mixed polymer material is a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material, and

wherein the polymer having the urethane functional group and/or the polymer having the amide functional group are selectively dissolved from the mixed polymer material by bringing, into sequential or simultaneous contact with the mixed polymer material, at least one first compound selected from aromatic compounds having at least one alkoxy functional group and at least one second compound selected from compounds having at least one alcohol functional group.

4. The method of claim 3, wherein when the polymer having the amide functional group is not present in the mixed polymer material, a temperature range for selectively dissolving only the polymer having the urethane functional group is from 100°C to 180°C.

5. The method of claim 3, wherein when both the polymer having the urethane functional group and the polymer having the amide functional group are present in the mixed polymer material, a temperature range for dissolving the polymer having the urethane functional group and the polymer having the amide functional group is from 135°C to 180°C.

6. The method of claim 3, wherein the sequential contact is performed by bringing the first compound into contact with the mixed polymer material first, followed by bringing the second compound into contact therewith.

7. The method of claim 3, wherein a mass ratio of the first compound to the mixed polymer material is in a range of 0.1 to 1,000 times, and a weight ratio of the first compound to the second compound is in a range of 0.01 to 100.

8. A method for recycling a mixed polymer material,
wherein the mixed polymer material is a material in which at least one polymer selected from a polymer having a urethane functional group and a polymer having an amide functional group and at least one polymer selected from cotton, linen, rayon, silk, acrylic, polyethylene, polypropylene, and a polymer having an ester functional group constitute a part or all of the components of the mixed polymer material, the method comprising:

(a) bringing, into contact with the mixed polymer material, at least one first compound selected from aromatic compounds having at least one alkoxy functional group and at least one second compound selected from compounds having at least one alcohol functional group, thereby selectively dissolving only the polymer having the urethane functional group and/or the polymer having the amide functional group within the mixed polymer material;
(b) filtering the mixed solution generated after the selective dissolution to separate the polymer having the urethane functional group and/or the polymer having the amide functional group from the mixed polymer material; and
(c) depolymerizing the polymers separated as a solid phase.

9. The method of claim 8, wherein the polymers depolymerized in step (c) include the polymer having the ester functional group.

10. The method of claim 9, further comprising:

after step (c), (d) adjusting a temperature of the mixture containing the separated polymers having the urethane functional group and the amide functional group, thereby selectively precipitating only the polymer having the amide functional group and separating the polymer having the urethane functional group; and

(e) depolymerizing the separated polymer having the urethane functional group.

11. The method of claim 9, further comprising:
    after step (c), depolymerizing the separated polymer having the urethane functional group.

12. The method of claim 10 or 11, wherein the depolymerizing of the polymer having the urethane functional group is performed by adding a depolymerization catalyst for the polymer having the urethane functional group to the filtrate obtained after filtration.

13. The method of claim 12, wherein the depolymerization catalyst for the polymer having the urethane functional group is at least one selected from the group consisting of metal catalysts such as alkali hydroxides, alkaline earth hydroxides, alkali acetates, alkaline earth acetates, alkali carbonates, alkali bicarbonates, alkaline earth carbonates, alkali oxides; and guanidine-based or amine-based organic compounds.

14. The method of claim 11, wherein the depolymerizing of the polymer having the urethane functional group is performed at a temperature in a range of 100°C to 170°C.

15. The method of claim 9, wherein the depolymerizing of the polymer having the ester functional group in step (c) is performed by using at least one method selected from hydrolysis, glycolysis, methanolysis, ethanolysis, and ammonolysis.

16. The method of claim 8, wherein among the solid-phase polymers separated in step (c), non-depolymerizable materials are separated from the reaction product by filtration or centrifugation.

Fig.1

Fig.2

Fig.3

Fig.4

## Structure of polyester

Fig.5

## Structure of polyurethane (Spandex)

Fig.6

Fig.7

Fig.8

| Raw Material 4 | Comparative Example 7 | Example 12 | Example 13 | Example 14 |
|---|---|---|---|---|
| (No treatment) | (T = 90 ℃) | (T = 110 ℃) | (T = 130 ℃) | (T = 150 ℃) |

Fig.9

**Structure of polyol (PTFA)**

Fig.10

Fig.11

Fig.12

| Blended (nylon–PU) textile | Homogeneous phase mixture | PU extract solution, separated nylon, extracted dye |

Fig.13

Fig.14

Structure of nylon (nylon 6)

Fig.15

Fig.16

| Classification (starting polymer composition) | Waste textile (raw material) | Fiber obtained after removal of PU and nylon by selective dissolution | Residual fiber obtained after applying depolymerization to material from which PU and nylon have been removed |
|---|---|---|---|
| Raw Material 8 (Cotton 60%, Rayon 30%, PU 10%) | | | |
| Raw Material 9 (Cotton 75%, Rayon 20%, PU 5%) | | | |
| Raw Material 10 (Cotton 65%, Rayon 32%, PU 3%) | | | |
| Raw Material 11 front side (Polyester 60%, Cotton 35%, PU 5%) | | | |
| Raw Material 11 back side (Polyester 60%, Cotton 35%, PU 5%) | | | |
| Raw Material 12 (Polyester 49%, Tencel 44%, PU 7%) | | | |
| Raw Material 13 (Polyester 54%, Nylon 38%, PU 8%) | | | Fully decomposed |

Fig.17

| Classification of starting polymer materials | Waste textile (raw material) | Residual fiber obtained after applying depolymerization to material from which PU and nylon have been removed | Morphology of residual fiber |
|---|---|---|---|
| Acrylic fiber in Raw Material 14 | | | |
| Silk fiber in Raw Material 14 | | | |

## INTERNATIONAL SEARCH REPORT

| International application No. |
| --- |
| **PCT/KR2024/011169** |

### A. CLASSIFICATION OF SUBJECT MATTER

**C08J 11/08**(2006.01)i; **C08J 11/24**(2006.01)i; **C08J 11/28**(2006.01)i; **C08J 11/16**(2006.01)i; **C08J 11/18**(2006.01)i

According to International Patent Classification (IPC) or to both national classification and IPC

### B. FIELDS SEARCHED

Minimum documentation searched (classification system followed by classification symbols)

C08J 11/08(2006.01); B08B 3/04(2006.01); C08F 8/50(2006.01); C08J 11/00(2006.01); C08J 11/22(2006.01); C08J 11/24(2006.01); C08L 77/00(2006.01); C11D 3/43(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 혼합직물(blended textile), 용해(dissolve), 폴리아미드(polyamide), 나일론 (nylon), 우레탄(urethane)

### C. DOCUMENTS CONSIDERED TO BE RELEVANT

| Category* | Citation of document, with indication, where appropriate, of the relevant passages | Relevant to claim No. |
| --- | --- | --- |
| A | CN 113717433 A (FUJIAN SELON TECHNOLOGY CO., LTD.) 30 November 2021 (2021-11-30)<br>See paragraphs [0005], [0022], [0025] and [0036]; and claim 1. | 1-16 |
| A | US 9868867 B1 (MANLEY, Russell Scott) 16 January 2018 (2018-01-16)<br>See paragraphs [0038], [0041] and [0042]; and claim 1. | 1-16 |
| A | KR 10-2022-0150033 A (KOREA RESEARCH INSTITUTE OF CHEMICAL TECHNOLOGY) 10 November 2022 (2022-11-10)<br>See paragraphs [0048]-[0076]; and claims 1-12. | 1-16 |
| A | KR 10-2023-0097605 A (KOREA RESEARCH INSTITUTE OF CHEMICAL TECHNOLOGY) 03 July 2023 (2023-07-03)<br>See paragraphs [0039]-[0056]; and claims 1-12. | 1-16 |
| A | JP 2023-064037 A (NAN YA PLASTIC CORP.) 10 May 2023 (2023-05-10)<br>See paragraphs [0023]-[0046]. | 1-16 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 November 2024** | **20 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/011169**

### C. DOCUMENTS CONSIDERED TO BE RELEVANT

| Category* | Citation of document, with indication, where appropriate, of the relevant passages | Relevant to claim No. |
|---|---|---|
| PX | KR 10-2664279 B1 (KOREA RESEARCH INSTITUTE OF CHEMICAL TECHNOLOGY) 08 May 2024 (2024-05-08)<br>See claims 1-12.<br>This document is a published earlier application that serves as a basis for claiming priority of the present international application. | 1-16 |

Form PCT/ISA/210 (second sheet) (July 2022)

**INTERNATIONAL SEARCH REPORT**
**Information on patent family members**

International application No.

**PCT/KR2024/011169**

| Patent document cited in search report | | | Publication date (day/month/year) | Patent family member(s) | | | Publication date (day/month/year) |
|---|---|---|---|---|---|---|---|
| CN | 113717433 | A | 30 November 2021 | CN | 113717433 | B | 11 August 2023 |
| US | 9868867 | B1 | 16 January 2018 | None | | | |
| KR | 10-2022-0150033 | A | 10 November 2022 | KR | 10-2522806 | B1 | 18 April 2023 |
| | | | | KR | 10-2622494 | B1 | 09 January 2024 |
| | | | | WO | 2022-235051 | A1 | 10 November 2022 |
| KR | 10-2023-0097605 | A | 03 July 2023 | KR | 10-2642767 | B1 | 04 March 2024 |
| | | | | WO | 2023-121411 | A1 | 29 June 2023 |
| JP | 2023-064037 | A | 10 May 2023 | CN | 116023708 | A | 28 April 2023 |
| | | | | JP | 7376642 | B2 | 08 November 2023 |
| | | | | US | 2023-130708 | A1 | 27 April 2023 |
| KR | 10-2664279 | B1 | 08 May 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014058476 A
- JP 2019035022 A

- JP 2011231279 A